# EUROPÄISCHE PATENTSCHRIFT

(11) **EP 3 887 694 B1**
(45) Veröffentlichungstag und Bekanntmachung des Hinweises auf die Patenterteilung: **17.08.2022**
(21) Anmeldenummer: 20800860.7
(22) Anmeldetag: 30.10.2020
(51) Int. Cl.: F16H 61/04, F16H 3/089

(54) **ANTRIEB, KOPPELELEMENT SOWIE VERFAHREN ZUM BETREIBEN EINES ANTRIEBES**
DRIVE, COUPLING ELEMENT AND METHOD FOR OPERATING A DRIVE
ENTRAÎNEMENT, ÉLÉMENT D'ACCOUPLEMENT ET PROCÉDÉ POUR FAIRE FONCTIONNER UN ENTRAÎNEMENT

(30) Priorität: 30.10.2019 WO PCT/EP2019/079611
(43) Veröffentlichungstag der Anmeldung: 06.10.2021
(73) Patentinhaber: SaLa Drive GmbH, 4710 Grieskirchen (AT)
(72) Erfinder: KAISER, Mario, 4741 Wendling bei Haag (AT)
(74) Vertreter: Wirnsberger & Lerchbaum Patentanwälte OG
(86) Internationale Anmeldenummer: PCT/EP2020/080591
(87) Internationale Veröffentlichungsnummer: WO 2021/084107

(56) Entgegenhaltungen:
- EP-A1- 3 473 894
- EP-A2- 1 104 712
- WO-A1-2016/177392
- US-A- 3 896 914
- US-A- 5 827 148
- US-A1- 2014 228 169
- US-A1- 2019 078 686

## Beschreibung

Die Erfindung betrifft einen Antrieb gemäß Anspruch 1.

Weiter betrifft die Erfindung ein Koppelelement für einen Antrieb.

Darüber hinaus betrifft die Erfindung ein Verfahren zum Betreiben eines Antriebes, gemäß Anspruch 13.

Aus dem Stand der Technik sind verschiedene Antriebe der eingangs genannten Art bekannt geworden, welche allerdings aufwendig und teuer in einer Herstellung sind und bei einer Anwendung nur eine geringe Effizienz aufweisen.

Beispielsweise sind Antriebe mit Elektromotoren aus den Dokumenten

WO 2013/072609 A1, WO 2019/141684 A1 und FR 2 701 679 A1 bekannt geworden, bei welchen teilweise auch eine Drehzahl des Elektromotors während eines Schaltvorganges geändert wird.

Aus dem Dokument US 5,827,148 A ist ein Antrieb mit einem zwei Gänge aufweisenden Getriebe bekannt geworden, wobei der Motor über in Lücken eingreifende Vertiefungen entweder direkt oder über ein zweistufiges Stirnradgetriebe mit einem Abtrieb gekoppelt wird.

Das Dokument US 2019/0078686 A1 offenbart insbesondere eine Schalteinrichtung für ein Getriebe zum Herstellen einer schaltbaren drehfesten Verbindung wahlweise zwischen einem ersten Losrad und zweiten Losrad oder zwischen dem ersten Losrad und einer Welle. Die Verbindung erfolgt dabei mit einer Schiebemuffe, welche über in Öffnungen formschlüssig eingreifende Fortsätze stets drehfest und gleichzeitig axial verschiebbar mit einem ersten Losrad verbunden ist. Vor Herstellung der jeweiligen drehfesten Verbindung werden dabei die beteiligten Bauelemente synchronisiert, und zwar mit einer Synchronisiereinrichtung oder einer unsynchronisierten Klauenverzahnung. Dennoch weisen die in diesen Dokumenten offenbarten Antriebe nur eine geringe Effizienz und gleichzeitig hohe Schaltzeiten auf, sodass diese nicht für ein komfortables Fahrerlebnis geeignet sind, sondern vielmehr eine bei einem Fahrer spürbare Zugkraftunterbrechung während eines Schaltvorganges bewirken.

Hier setzt die Erfindung an. Aufgabe der Erfindung ist es, einen Antrieb der eingangs genannten Art anzugeben, welcher auf besonders einfache und kostengünstige Weise herstellbar ist.

Ferner soll ein Koppelelement angegeben werden, mit welchem eine Antriebswelle mit einer Abtriebswelle eines solchen Antriebes lösbar über einen Gang koppelbar ist.

Weiter soll ein Verfahren der eingangs genannten Art angegeben werden, welches in kostengünstiger Weise umsetzbar und mit einem einfach aufgebauten Antrieb durchführbar ist.

Die erste Aufgabe wird erfindungsgemäß durch einen Antrieb der eingangs genannten Art gelöst, bei welchem die Antriebswelle mit der Abtriebswelle über einen Gang lösbar mittels zumindest einer in eine Vertiefung eingreifende Klaue koppelbar ist, wobei die Vertiefung in einem Fenster angeordnet ist, welches sich entlang einer Richtung erstreckt, entlang welcher ein mit der Antriebswelle gekoppeltes Element relativ zu einem mit der Abtriebswelle gekoppelten Element bewegbar ist, wenn die Abtriebswelle bei einem Schaltvorgang nicht mit der Antriebswelle gekoppelt ist, sodass die Klaue von einem ausgekuppelten Zustand durch das Fenster in die Vertiefung bewegbar ist.

Im Rahmen der Erfindung wurde erkannt, dass der Antrieb dann besonders einfach und kostengünstig ausgebildet sein kann, wenn eine Synchronisierung der mit dem Motor verbundenen Welle mit der mit dem Abtrieb verbundenen Welle im Getriebe nicht mechanisch erfolgt, beispielsweise wie bei Getrieben des Standes der Technik üblich über Synchronringe bzw. mittels Reibung, sondern eine Synchronisierung elektrisch erfolgt, indem der Elektromotor auf die entsprechende Geschwindigkeit beschleunigt bzw. abgebremst wird, wobei die Drehzahl des Elektromotors üblicherweise vor und nach dem Schaltvorgang größer als Null ist. Dieses elektrische Beschleunigen bzw. Abbremsen kann beispielsweise bei einem Synchron- oder Asynchronmotor auf einfache Weise durch entsprechende Ansteuerung eines Wechselrichters erfolgen, mit welchem eine Drehzahl des Motors wie aus dem Stand der Technik bekannt definiert wird. Natürlich ist ein erfindungsgemäßer Antrieb auch mit einem Gleichstrommotor umsetzbar. Das Getriebe kann dann ohne eine entsprechende und auf Reibung basierende mechanische Synchronisiereinrichtung ausgebildet sein, sodass dieses nicht nur kostengünstig und einfach, sondern auch verschleißarm und klein ausgebildet sein kann, zumal im Getriebe im Unterschied zu Getrieben des Standes der Technik kinetische Energie nicht oder nur in sehr geringem Ausmaß, wenn trotz der elektrischen Synchronisierung noch eine kleine Relativgeschwindigkeit besteht, in Wärme gewandelt werden muss, um eine Synchronisierung zu erreichen. Entsprechend kann das Getriebe mit geringerer Oberfläche ausgebildet sein, da über die Oberfläche nur eine geringere Wärmemenge abgegeben werden muss. Nachdem das Getriebe nicht für eine mechanische Synchronisierung der Drehzahl des Motors bzw. für einen mechanischen Beschleunigungs- bzw. Abbremsvorgang mittels Reibung ausgebildet sein muss, kann das Getriebe auch aus einfachen und kostengünstig herstellbaren Materialien ausgebildet sein, beispielsweise aus einem Einsatzstahl. Eine Koppelung der Antriebswelle mit der Abtriebswelle erfolgt erfindungsgemäß mittels eines Formschlusses, wodurch ein besonders rasches Einkuppeln, insbesondere im Vergleich mit üblichen reibschlüssigen Kupplungen des Standes der Technik, ermöglicht ist.

Günstig ist es, wenn der Antrieb zur Herstellung einer lösbaren rotatorischen formschlüssigen Verbindung zwischen der Antriebswelle und der Abtriebswelle ein rotierbares erstes Element mit einem Fenster, in welchem ein Anschlag angeordnet ist, und ein rotierbares zweites Element mit einem in das Fenster einführbaren Vorsprung, insbesondere einer Klaue, aufweist, wobei mittels des Vorsprunges eine Rotationsbewegung vom zweiten Element auf das erste Element formschlüssig übertragbar ist. Der Formschluss zur Koppelung einer Rotationsbewegung der Antriebswelle mit der Abtriebswelle kann somit auf einfache Weise durch ein Einführen des Vorsprunges in das Fenster erfolgen. Üblicherweise wird der Vorsprung in das Fenster eingeführt, indem ein Abstand zwischen dem ersten Element und dem zweiten Element in Richtung einer Achse, um welche das erste Element und das zweite Element rotieren, bzw. in Achsrichtung verringert wird, bis der Vorsprung innerhalb des Fensters positioniert ist. Es kann dann der Vorsprung zum Anschlag bewegt werden, indem das zweite Element relativ zum ersten Element um die Achse gedreht wird.

Das Fenster ist üblicherweise größer ausgebildet als der Vorsprung, sodass der Vorsprung auch bei eine Relativgeschwindigkeit zwischen erstem Element und zweitem Element um die Achse leicht in das Fenster einführt werden kann. Ferner ist dadurch auch dann noch eine Relativbewegung zwischen Vorsprung und Fenster möglich, wenn der Vorsprung bereits in das Fenster eingeführt ist, bis der Vorsprung am Anschlag im Fenster anliegt, wodurch der Formschluss erfolgt. Beispielsweise kann das Fenster als kreisbogenförmige Ausnehmung im ersten Element ausgebildet sein, in welche Ausnehmung der Vorsprung eingreifen kann, wobei der Anschlag durch ein Ende der kreisbogenförmigen Ausnehmung in Umfangsrichtung gebildet ist.

Es versteht sich, dass durch das Anliegen des Vorsprunges am Anschlag ein Formschluss in Rotationsrichtung gegeben ist, jedoch noch kein Formschluss entgegen der Rotationsrichtung gegeben ist. Um eine im Wesentlichen spielfreie rotatorische Verbindung zwischen der Antriebswelle und der Abtriebswelle herzustellen, ist im Fenster eine Vertiefung angeordnet, welche spielfrei mit dem Vorsprung korrespondieren kann. Der Vorsprung kann dann nach Herstellung der formschlüssigen Verbindung durch ein Anliegen am Anschlag durch eine weitere Bewegung in Achsrichtung in die Vertiefung eingeführt werden, um eine spielfreie Verbindung herzustellen. Nachdem bei einem Anliegen des Vorsprunges am Anschlag keine Relativgeschwindigkeit mehr zwischen erstem Element und zweitem Element in Umfangsrichtung besteht, ist ein Einführen in die Vertiefung, die kleiner als das Fenster ist, dann einfach möglich. Das erste Element kann beispielsweise axial verschiebbar und drehfest mit der Abtriebswelle oder der Antriebswelle sein und das zweite Element kann drehfest mit einem Zahnrad eines Ganges verbunden oder durch ein Zahnrad gebildet sein, um durch das Einführen des Vorsprunges in das Fenster eine rotatorische Koppelung zwischen Antriebswelle und Abtriebswelle über den einen der Gänge herzustellen. Selbstverständlich kann auch das erste Element, welches das Fenster aufweist, mit einem Zahnrad verbunden oder durch das Zahnrad gebildet und das zweite Element drehfest mit der Antriebswelle oder Abtriebswelle verbunden sein. Üblicherweise sind Sensoren vorgesehen, mit welchen Drehzahlen der Antriebswelle und der Abtriebswelle erfassbar sind, um eine exakte Regelung des Elektromotors auf die zweite Geschwindigkeit zu ermöglichen.

Wenn beispielsweise der erste Gang ein Übersetzungsverhältnis von 4 hat, sodass eine Eingangsdrehzahl des Elektromotors von beispielsweise 4000 Umdrehungen pro Minute bzw. min⁻¹ auf eine Ausgangsdrehzahl am Getriebeausgang von 1000 min⁻¹ übersetzt wird, und der zweite Gang ein Übersetzungsverhältnis von 2 hat, sodass eine Eingangsdrehzahl des Elektromotors von 4000 min⁻¹ auf eine Ausgangsdrehzahl am Getriebeausgang von 2000 min⁻¹ übersetzt wird, muss der Elektromotor für ein möglichst sanftes und somit komfortables Schalten der Gänge während des Schaltvorganges auf eine Drehzahl abgebremst werden, welche dem Quotienten aus zweitem Übersetzungsverhältnis und erstem Übersetzungsverhältnis, also dem Quotienten aus 2 und 4, somit 0,5 entspricht. Wenn die Drehzahl des Elektromotors somit zu Beginn des Schaltvorganges 1000 Umdrehungen pro Minute beträgt, muss diese während des Schaltvorganges durch die elektrische Synchronisiereinrichtung auf 500 Umdrehungen pro Minute abgebremst werden, um während des Schaltvorganges eine konstante Drehzahl der Abtriebswelle von 250 min⁻¹ zu gewährleisten. Es versteht sich, dass diese Drehzahlen beispielhaft zu verstehen sind und eine Synchronisierungsdrehzahl bei einem erfindungsgemäßen Antrieb üblicherweise insbesondere abhängig von einem verwendeten Motor, einer Schaltzeit und einer Anwendung des Antriebes, beispielsweise in einem Elektrofahrzeug, ist. Die Abtriebswelle kann beispielsweise mit Rädern eines Kraftfahrzeuges verbunden sein, um dieses anzutreiben. Diese elektrische Synchronisierung ist beispielsweise mit einem Wechselrichter, welcher mit einem entsprechend dimensionierenten Akkumulator verbunden ist, auf einfache Weise ohne Verschleißelemente möglich. Es versteht sich, dass die Übersetzungen der einzelnen Gänge beliebige positive und negative Werte sein können, welche größer und kleiner als 1,0 sein können, sodass also sowohl Übersetzungen ins Schnelle als auch Übersetzungen ins Langsame mit einem erfindungsgemäßen Antrieb möglich sind.

Günstig ist es, wenn der Antrieb zur Durchführung eines Schaltvorganges ausgebildet ist, bei welchem die Dauer des Schaltvorganges weniger als eine Sekunde, insbesondere weniger als 150 Millisekunden, beträgt. Dies gewährleistet ein besonders rasches Wechseln der Gänge bzw. ein Wechseln einer Übersetzung einer Drehzahl des Elektromotors auf eine Ausgangsdrehzahl am Getriebeausgang, welcher beispielsweise mit Rädern eines Elektrofahrzeuges verbunden sein kann. Um entsprechend kurze Schaltvorgänge gewährleisten zu können, ist es günstig, wenn der Elektromotor mit einem geringen Trägheitsmoment der bewegenden Massen bzw. des Ankers ausgebildet ist und/oder die elektrische Synchronisiereinrichtung zur Aufnahme bzw. zur Abgabe großer Leistungen ausgebildet ist. Dies kann beispielsweise durch eine Elektronik wie einen Wechselrichter erreicht werden, welcher für entsprechend große Ströme bzw. Leistungen geeignet ist. Ferner ist es vorteilhaft, wenn ein elektrischer Energiespeicher vorgesehen ist, welcher sowohl zur Aufnahme als auch zur Abgabe großer elektrischer Leistungen eingerichtet ist. Günstig ist es, wenn ein Akkumulator mit dem Elektromotor verbunden ist, in welchem elektrische Energie speicherbar ist, welche im Elektromotor bei einem Abbremsvorgang erzeugt wird. Selbstverständlich ist es alternativ oder ergänzend auch möglich, im Elektromotor bei einem Abbremsvorgang erzeugte elektrische Energie teilweise oder vollständig in Wärme umzuwandeln anstatt diese zu speichern. Beispielsweise können hierzu ein Heizwiderstand und/oder ein elektrisch angetriebenes Schwungrad vorgesehen sein.

Üblicherweise ist ein Akkumulator über einen Wechselrichter mit dem Elektromotor verbunden, sodass der Elektromotor einerseits durch den Akkumulator angetrieben und andererseits bei einem Abbremsen des Elektromotors eine im Elektromotor generatorisch erzeugte elektrische Energie über den Wechselrichter in den Akkumulator eingespeichert werden kann. Selbstverständlich kann der Elektromotor auch als Gleichstrommotor ausgebildet sein, sodass ein Wechselrichter nicht erforderlich ist.

Günstig ist es, wenn zumindest ein Koppelelement vorgesehen ist, welches in einer ersten Richtung, insbesondere in einer Umfangsrichtung, formschlüssig und in einer zweiten Richtung, insbesondere in einer Achsrichtung, bewegbar mit der Antriebswelle oder der Abtriebswelle verbunden ist, um zumindest einen Gang lösbar mit der Antriebswelle oder der Abtriebswelle zu verbinden. Es versteht sich, dass die Bezeichnungen "Umfangsrichtung" und "Achsrichtung" dabei jeweils in Bezug zu der Welle, also der Antriebswelle oder der Abtriebswelle, zu verstehen sind, mit welcher das Koppelelement verbunden ist. Beispielsweise kann das Koppelelement als auf der Abtriebswelle axial verschiebbare Hülse ausgebildet sein, welche drehfest mit der Abtriebswelle verbunden ist und zur Herstellung einer formschlüssigen drehfesten Verbindung der Abtriebswelle mit einem Zahnrad eines Ganges durch axiale Verschiebung der Hülse geeignet ist.

Die einzelnen Gänge, welche beispielsweise durch Zahnradpaare mit unterschiedlichen Übersetzungen gebildet sein können, können nicht gleichzeitig mit der Antriebswelle und der Abtriebswelle verbunden sein, da dies zu einer kinematischen Überbestimmung führen würde. Es kann daher nur maximal ein Gang gleichzeitig eingelegt sein, durch welchen eine Übersetzung der Antriebswelle auf die Abtriebswelle definiert ist. Alle anderen Gänge müssen dann von der Antriebswelle und/oder der Abtriebswelle kinematisch getrennt sein, sodass eine Drehbewegung der Antriebswelle nur über einen Gang in eine Drehbewegung der Abtriebswelle übersetzt wird. Die einzelnen Gänge müssen somit mit der Antriebswelle und/oder der Abtriebswelle lösbar verbunden sein, wobei eine kinematische Verbindung während eines Schaltvorganges lösbar bzw. herstellbar sein muss. Eine entsprechende Verbindung kann beispielsweise mit einem Koppelelement hergestellt werden, welches kraftschlüssig oder formschlüssig in Umfangsrichtung, also drehfest, mit der Antriebswelle oder der Abtriebswelle verbunden sein kann, sodass das Koppelelement mit der Antriebswelle oder der Abtriebswelle mitrotiert und zum Herstellen oder Lösen einer Verbindung der Antriebswelle oder der Abtriebswelle mit einem Zahnrad des jeweiligen Ganges axial auf der Antriebswelle oder der Abtriebswelle verschiebbar ist, um ab einer vordefinierten axialen Position einen Formschluss auch in Umfangsrichtung mit dem jeweiligen Zahnrad herzustellen, sodass das Zahnrad in Umfangsrichtung über das Koppelelement formschlüssig, also drehfest, mit der Antriebswelle oder der Abtriebswelle verbunden ist. Ein Gang kann somit mit der Antriebswelle oder der Abtriebswelle auf einfache und gleichzeitig rasche Weise durch eine axiale Bewegung des Koppelelementes auf der Antriebswelle oder der Abtriebswelle verbunden werden. In gleicher Weise kann eine Verbindung auf einfache Weise gelöst werden.

Das Koppelelement kann grundsätzlich auf verschiedene Weisen mit einem Gang bzw. einem Zahnrad des Ganges, welcher über das Koppelelement mit der Antriebswelle oder der Abtriebswelle verbunden werden soll, zusammenwirken, beispielsweise reibschlüssig oder magnetisch, um eine drehfeste Verbindung herzustellen. Ein besonders einfacher Aufbau ergibt sich insbesondere dann, wenn zumindest ein Koppelelement formschlüssig lösbar mit zumindest einem Gang verbindbar ist. Dadurch können auch große Drehmomente auf zuverlässige Weise und schlupffrei übertragen werden.

Bevorzugt ist das Koppelelement auch mit der Antriebswelle oder der Abtriebswelle in Umfangsrichtung formschlüssig verbunden, insbesondere über eine Innenverzahnung oder eine Keilwelle. Ein Formschluss in Umfangsrichtung mit dem Zahnrad des Ganges, welcher über das Koppelelement mit der Antriebswelle oder der Abtriebswelle verbunden werden soll, kann ebenfalls über eine Verzahnung, eine Klaue oder dergleichen erfolgen.

Um einen besonders einfachen Aufbau zu erreichen, ist es günstig, wenn das Koppelelement an einer ersten Seite, insbesondere einer Stirnseite, mit dem ersten Gang und an einer zweiten Seite, insbesondere einer der ersten Seite gegenüberliegenden Stirnseite, mit dem zweiten Gang verbindbar ist. Es ist dann ein einziges Koppelelement ausreichend, um wahlweise einen von zwei Gängen einzukuppeln bzw. eine Koppelung von einem der beiden Gänge mit der Antriebswelle oder der Abtriebswelle herzustellen. Das Koppelelement kann dann beispielsweise auf der Abtriebswelle zwischen Zahnrädern des ersten Ganges und Zahnrädern des zweiten Ganges angeordnet sein, um je nach einer Axialposition des Koppelelementes auf der Abtriebswelle den ersten Gang oder den zweiten Gang mit der Abtriebswelle zu verbinden. Analog wäre auch eine entsprechende Anordnung auf der Antriebswelle möglich.

Erfindungsgemäß ist vorgesehen, dass die Antriebswelle mit der Abtriebswelle über einen Gang lösbar mittels zumindest einer in eine Vertiefung eingreifenden Klaue koppelbar ist. Über die Klaue kann somit auf einfache Weise eine lösbare formschlüssige Verbindung zur Übertragung eines Drehmomentes hergestellt werden. Durch ein Bewegen der Klaue aus der Vertiefung wird der Formschluss auf einfache Weise gelöst, sodass die Antriebswelle mit der Abtriebswelle nicht mehr über den entsprechenden Gang verbunden ist.

Besonders vorteilhaft können die Vorteile eines erfindungsgemäßen Antriebes umgesetzt werden, wenn dieser in einem Fahrzeug, insbesondere einem Elektrofahrzeug, eingesetzt wird, um das Fahrzeug anzutreiben bzw. zu bremsen. Es ist somit bei einem Elektrofahrzeug mit einem Antrieb, insbesondere bei einem Elektroauto, einem Elektroboot oder einem Elektromotorrad, vorteilhaft, wenn der Antrieb erfindungsgemäß ausgebildet ist. Es versteht sich, dass hier unter Elektrofahrzeuge sowohl Fahrzeuge verstanden werden, welche ausschließlich elektrisch angetrieben werden, als auch sogenannte Hybrid-Fahrzeuge, bei welchen ergänzend zu einem Elektromotor auch ein Verbrennungsmotor vorgesehen sein kann.

Günstig ist es, wenn die Klaue und die Vertiefung derart ausgebildet sind, dass die Klaue dann, wenn die Antriebswelle mit der Abtriebswelle gekoppelt ist, relativ zur Vertiefung ein Spiel von weniger als 20 mm, insbesondere weniger als 10 mm, vorzugsweise weniger als 5 mm, aufweist. Dadurch kann die Klaue beispielsweise auch dann einfach in die Vertiefung eingebracht werden, wenn an der Klaue bzw. die Vertiefung einen Hinterschnitt aufweisen, um ein unbeabsichtigtes Entfernen der Klaue aus der Vertiefung auf einfache Weise zu vermeiden. Ein Spiel kann dabei beispielsweise eine Rotation von einem die Klaue aufweisenden Bauteil relativ zu einem die Vertiefung aufweisenden Bauteil von weniger als 5°, insbesondere weniger als 2°, erlauben.

Um einen hohen Komfort beispielsweise bei Einsatz des Getriebes in einem Kraftfahrzeug zu erreichen, ist es günstig, wenn die Klaue im Wesentlichen spielfrei in der Vertiefung positionierbar ist. Dadurch werden unangenehm wirkende Geräusche bzw. Vibrationen im Getriebe vermieden. Die Klaue kann auch einen Hinterschnitt aufweisen, sodass ein unbeabsichtigtes Entfernen der Klaue aus der Vertiefung auf einfache Weise vermieden wird.

Erfindungsgemäß ist vorgesehen, dass die Vertiefung in einem Fenster angeordnet ist, welches sich entlang einer Richtung erstreckt, entlang welcher ein mit der Antriebswelle gekoppeltes Element relativ zu einem mit der Abtriebswelle gekoppelten Element bewegbar ist, wenn die Abtriebswelle bei einem Schaltvorgang nicht mehr mit der Antriebswelle gekoppelt ist, sodass die Klaue von einem ausgekoppelten Zustand durch das Fenster in die Vertiefung bewegbar ist. Üblicherweise ist das Fenster in einer Stirnfläche des Koppelelementes angeordnet, welche Stirnfläche des Koppelelementes bei einem Koppelvorgang mit einem Zahnrad über die Klaue bewegt wird, sodass die Klaue in die im Fenster in der Stirnfläche angeordnete Vertiefung eingreifen kann. Das Fenster weist somit ausgehend von der Stirnseite eine geringere Tiefe als die Vertiefung, jedoch eine größere Erstreckung in Umfangsrichtung als die Vertiefung auf, sodass die Klaue mittels des Fensters auch bei einer Relativbewegung zwischen der Klaue und der Vertiefung sozusagen durch das Fenster gefangen wird und über einen Formschluss in Umfangsrichtung in Bezug auf eine Umfangsgeschwindigkeit mit dem Fenster bzw. ein das Fenster aufweisendes Bauteil mit einem die Klaue aufweisenden Bauteil synchronisiert werden kann. Dadurch kann beispielsweise ein eine oder mehrere Klauen aufweisendes Zahnrad auf einfache Weise mit einer durch eine Klauenscheibe, welche zu den Klauen korrespondierende Vertiefungen aufweist, die in Fenstern angeordnet sind, gebildeten Koppeleinrichtung synchronisiert werden, um eine drehfeste Verbindung zwischen der Koppeleinrichtung und dem Zahnrad herzustellen.

Der Begriff Fenster wird hierbei breit verstanden und definiert einen Bereich, welcher einen Boden aufweist, der zumindest teilweise, vorzugsweise gänzlich zwischen einem Teil der Stirnfläche des Koppelelementes, insbesondere zwischen einer Ebene der Stirnfläche, und einer Einrastebene liegt, in welcher Einrastebene sich ein axiales Ende der Klaue befindet, wenn sich die Klaue in der Vertiefung befindet und die Antriebswelle mit der Abtriebswelle gekoppelt ist. Weiter weist das Fenster in Umfangsrichtung in der Regel eine größere Erstreckung als die Vertiefung auf und entspricht eine Erstreckung des Fensters in radialer Richtung zumindest einer Erstreckung der Vertiefung in radialer Richtung, sodass die Klaue von der Stirnfläche aus durch eine Bewegung in axialer Richtung vollständig in das Fenster bewegt werden kann, wonach die Klaue im Fenster am Boden des Fensters bis zur Vertiefung gleiten kann, wonach die Klaue durch eine weitere Bewegung in axialer Richtung in die Vertiefung eingeführt werden kann. Es ist folglich nicht relevant, ob eine radiale Erstreckung des Fensters exakt einer radialen Erstreckung der Klaue entspricht oder größer ist. Insbesondere kann vorgesehen sein, dass sich eine radiale Erstreckung des Fensters beispielsweise über eine gesamte radiale Erstreckung der Stirnseite bzw. des Koppelementes, also von einem Innendurchmesser des Koppelelementes bis zu einem Außendurchmesser, erstreckt. Der Begriff Fenster ist folglich gleichbedeutend mit einem der Begriffe Ausnehmung in der Stirnseite oder Vorvertiefung.

Weiter kann vorgesehen sein, dass der Boden des Fensters eine Zwischenebene bildet, welche sich zumindest teilweise zwischen der Stirnseite und einer Einrastebene befindet.

Das Fenster mit der darin angeordneten Vertiefung hat folglich die Wirkung, eine Synchronisierung auf konstruktiv besonders einfache Weise mittels der Klaue herzustellen, indem die Klaue zunächst in axialer Richtung bewegt und dabei in das Fenster eingeführt wird, welches größer als die Klaue ist, wonach die Klaue an einem Ende des Fensters anliegt, sodass ein Formschluss zwischen Klaue und Fenster in Umfangsrichtung erfolgt und durch diesen Formschluss eine Synchronisierung der Geschwindigkeit der Klaue und der Geschwindigkeit des Fensters erfolgt, wonach die Klaue durch weitere Bewegung in axialer Richtung in der Vertiefung positioniert wird, sodass die Klaue in Umfangsrichtung im Wesentlichen formschlüssig, gegebenenfalls mit einem geringen Spiel, mit der Vertiefung verbunden ist.

Dadurch ist auch bei hohen Drehzahlen ein zuverlässiges Einkuppeln möglich, indem die Klaue zunächst axial in das Fenster eingeführt wird, welches eine größere Erstreckung als die Vertiefung aufweist, sodass auch bei einem vergleichsweise hohen Drehzahlunterschied ein Eindringen der Klaue in das Fenster möglich ist bzw. die Klaue durch das Fenster gefangen werden kann. Wenn sich die Klaue im Bereich des Fensters befindet, ist eine Relativbewegung zwischen der Klaue und der Koppeleinrichtung nur mehr möglich, bis die Klaue an einer Begrenzung des Fensters anliegt oder wieder aus dem Fenster entfernt wird. Wenn die Klaue an einer Begrenzung bzw. an einem Anschlag des Fensters anliegt, wird diese am Anschlag bzw. einem Ende des Fensters in Umfangsrichtung mitgenommen, sodass eine Geschwindigkeit der Klaue einer Geschwindigkeit des Fensters bzw. der Vertiefung entspricht. Anders ausgedrückt ist somit auch dann ein Schaltvorgang möglich, wenn das Zahnrad und das Koppelelement bzw. die Welle, also üblicherweise die Antriebswelle oder die Abtriebswelle, mit welcher das entsprechende Zahnrad verbunden werden soll, unterschiedliche Geschwindigkeiten aufweisen, zumal eine Synchronisierung auf exakt dieselbe Winkelgeschwindigkeit dann über einen Formschluss bzw. ein Mitnehmen der Klaue durch den Anschlag des Fensters erfolgt. Anschließend kann die Klaue dann auf einfache Weise in die Vertiefung eingeführt werden, welche sich bevorzugt an dem Ende des Fensters befindet, an welchem sich auch der Anschlag befindet, mit dem die Klaue mitgenommen werden kann. Es kann auch vorgesehen sein, dass der Elektromotor bei einem Schaltvorgang durch die elektrische Synchronisiereinrichtung auf eine geringfügig schnellere oder langsamere Drehzahl gebracht wird, als es der ersten Drehzahl zu Beginn des Schaltvorganges multipliziert mit dem Quotienten aus zweiter Übersetzung und erster Übersetzung entspricht, um über eine geringfügige Relativdrehung ein zuverlässiges Schalten und sicheres Einführen der Klaue in die Vertiefung zu ermöglichen, zumal bei exakt gleicher Winkelgeschwindigkeit die Klaue bereits bei einem geringen Versatz nie in die Vertiefung einführbar wäre.

Wenn die Klaue an einem Zahnrad eines Ganges und die Vertiefung in dem Koppelelement, beispielsweise an einer Stirnseite des Koppelelementes, angeordnet sind, befindet sich das Fenster somit ebenfalls an der Stirnseite des Koppelelementes. Das Fenster weist ausgehend von der Stirnseite eine geringere Tiefe als die Vertiefung auf, sodass die Klaue zunächst bis an einen Grund des Fensters und anschließend in die Vertiefung eingeführt wird, wenn die Klaue in axialer Richtung zum Zahnrad hin bewegt wird, um das Zahnrad mit der Antriebswelle oder der Abtriebswelle über das Koppelelement zu verbinden.

Üblicherweise ist die Vertiefung endseitig im Fenster, insbesondere an einem umfangseitigen Ende des Fensters, angeordnet, um eine zuverlässige Verbindung zwischen der Klaue und der Vertiefung zu erreichen.

Wenngleich die einzelnen Gänge durch verschiedenste Elemente gebildet sein können, beispielsweise Reibräder oder Schubstangen, hat es sich besonders bewährt, dass der erste Gang durch eine erste Zahnradpaarung und der zweite Gang durch eine zweite Zahnradpaarung gebildet sind. Dadurch können auch bei hohen Drehzahlen ein geringer Verschleiß sowie eine hohe Lebensdauer erreicht werden.

Bevorzugt ist vorgesehen, dass die Zahnradpaarungen drehfest mit der Antriebswelle verbunden und über zumindest ein als Klauenscheibe ausgebildetes Koppelelement mit der Abtriebswelle verbindbar sind, wobei die Klauenscheibe formschlüssig in Umfangsrichtung mit der Abtriebswelle verbunden und in einer Achsrichtung relativ zur Abtriebswelle verschiebbar ist. Über eine axiale Bewegung der Klauenscheibe kann ein Gang bzw. eine Zahnradpaarung dann mit der Abtriebswelle verbunden oder von der Antriebswelle gelöst werden. Es versteht sich, dass alternativ oder ergänzend auch eine oder mehrere Klauenscheiben zur lösbaren Koppelung einer oder mehrerer Zahnradpaarungen mit der Antriebswelle vorgesehen sein können.

Es hat sich bewährt, dass die abtriebsseitigen Zahnräder der Zahnradpaarungen jeweils zumindest eine Klaue, vorzugsweise zwei bis sieben, insbesondere drei bis fünf, Klauen, aufweisen, welche sich in axialer Richtung erstrecken, und mit Vertiefungen in einer Stirnseite der Klauenscheibe korrespondieren. Dadurch wird einerseits ein zu übertragendes Drehmoment auf mehrere Kontaktflächen aufgeteilt, sodass auftretende mechanische Spannungen reduziert werden. Gleichzeitig wird bei einer entsprechenden Anzahl auch sichergestellt, dass alle Scheiben in Kontakt sind und Kräfte gleichmäßig übertragen werden.

Um ein zuverlässiges Einkuppeln zu gewährleisten, ist es günstig, wenn jede der zu den Klauen korrespondierenden Vertiefungen in der Klauenscheibe in einem entlang einer Umfangsrichtung verlaufenden Fenster angeordnet ist, wobei die Vertiefung in Umfangsrichtung endseitig im Fenster angeordnet ist. Es wird zum Koppeln der Antriebswelle mit der Abtriebswelle über einen Gang somit ein zweistufiger Einkuppelprozess ermöglicht, in welchem die Klaue auch bei einer Drehzahldifferenz zwischen dem Zahnrad und der Klauenscheibe zunächst in das Fenster eingeführt werden kann, in welchem die Klaue durch ein Anliegen an einem Anschlag auf eine der Geschwindigkeit des Fensters entsprechende Geschwindigkeit gebracht wird, wonach die Klaue auf einfache Weise in die im Fenster angeordnete Vertiefung eingeführt werden kann. Ohne ein entsprechendes Fenster wäre ein Einführen der Klaue in die Vertiefung, welche vorzugsweise im Wesentlichen die Abmessungen der Klaue aufweist, bei einer Relativgeschwindigkeit zwischen Vertiefung und Klaue nahezu nicht oder nur mit einer sehr hohen axialen Kraft zwischen Klauenscheibe und Klaue möglich, welche wiederum zu einem erhöhten Verschleiß führen würde.

Günstig ist es, wenn das Fenster an dem der Vertiefung gegenüberliegenden Ende eine Rampe aufweist, welche bevorzugt bis zur Stirnseite reicht. Dadurch kann auf einfache Weise verhindert werden, dass die Klaue bei einem Softwarefehler in ein Fenster eines falschen Zahnrades eingeführt wird. Vielmehr gleitet die Klaue dann über die Rampe wieder aus dem Fenster zurück auf die Stirnseite. Die Rampe hat üblicherweise einen Winkel von 10° bis 80°, insbesondere 20° bis 60°, vorzugsweise 30° bis 50°, gegenüber einer zur Stirnseite parallelen Ebene. Alternativ kann eine Absicherung auch in der Software erfolgen, sodass keine Rampe erforderlich ist, um ein Einführen einer Klaue, welche sowohl am Zahnrad als auch am Koppelelement angeordnet sein kann, in ein falsches Fenster zu verhindern, in welchem Fenster die Vertiefung angeordnet ist und welches Fenster ebenfalls sowohl am Koppelelement als auch im Zahnrad angeordnet sein kann.

Die Rampe verbindet üblicherweise einen Boden des Fensters mit der Stirnseite, sodass die Klaue über die Rampe mit durchgehendem Kontakt von der Stirnseite zum Boden des Fensters gleiten kann.

Bevorzugt ist vorgesehen, dass die Rampe eine Fläche aufweist, welche unter einem Winkel relativ zu einem Boden des Fensters angeordnet ist und den Boden des Fensters mit der Stirnseite verbindet. Der Boden des Fensters ist bevorzugt etwa parallel zur Stirnseite. Folglich entspricht der Winkel, unter welchem die Rampe relativ zur Stirnseite angeordnet ist, in der Regel auch dem Winkel, unter welchem die Rampe relativ zum Boden angeordnet ist, Der Winkel beträgt bevorzugt 10° bis 80°, insbesondere 20° bis 60°, vorzugsweise 30° bis 50.

Günstig ist es, wenn die zumindest eine Klaue an einer Kante eine Fase aufweist, wobei ein Winkel der Fase mit einem Winkel der Rampe korrespondiert, sodass die Klaue mittels einen Flächenkontaktes zwischen der Fase und der Rampe über die Rampe von der Stirnfläche in das Fenster gleiten kann.

Es hat sich bewährt, dass die zumindest eine Klaue eine Deckfläche aufweist, wobei eine Ausrichtung der Deckfläche mit einer Ausrichtung eines Bodens des Fensters korrespondiert, sodass die Klaue mittels einen Flächenkontaktes zwischen der Deckfläche und dem Boden über den Boden von der Rampe in die Vertiefung gleiten kann.

Anstelle der Rampe kann auch ein Anschlag am umfangsseitigen Ende des Fensters vorgesehen sein, um über einen Formschluss zwischen der Klaue und dem Fenster Energie im Fall einer ungewöhnlichen Fahrsituation zu rekuperieren. In diesem Fall kann auch über einen Teileingriff der Klaue, welche in diesem Fall zwar nicht in der Vertiefung, jedoch im Fenster eingerastet ist, Energie übertragen werden.

Die Klauenscheibe ist üblicherweise über eine Feder in axialer Richtung mittels eines Aktuators wie eines Linearmotors im Getriebe angeordnet. In der Regel wird die Klauenscheibe über eine Schaltgabel betätigt, welche in der Klauenscheibe in einer außenseitigen Rille geführt ist, wobei die Schaltgabel im Getriebe, welches üblicherweise als Automatikgetriebe ausgebildet ist, über eine Feder mittels eines Aktuators betätigbar sein kann, um die Klauenscheibe entlang einer Achsrichtung der Abtriebswelle bzw. parallel zu einer Rotationsachse der Abtriebswelle zu verschieben, sodass unterschiedliche Gänge mit der Abtriebswelle gekoppelt werden können.

Die weitere Aufgabe wird erfindungsgemäß durch ein Koppelelement der eingangs genannten Art gelöst, bei welchem an einer Stirnseite zumindest ein Fenster vorgesehen ist, welches sich über einen Teil eines Umfanges des Koppelelementes erstreckt, wobei an einem umfangseitigen Ende des Fensters eine Vertiefung angeordnet ist, in welche eine mit der Vertiefung korrespondierende Klaue eingreifen kann. Die Vertiefung ist in einer Umfangsrichtung größer als die Vertiefung, sodass eine Klaue, welche mit der Vertiefung etwa spielfrei koppelbar ist, bei einer Relativbewegung zwischen der Klaue und der Vertiefung in Umfangsrichtung durch das Fenster sozusagen gefangen werden kann, um die Klaue in die im Fenster befindliche Vertiefung einzuführen. Die Vertiefung weist somit von der Stirnfläche bzw. einer Stirnseite des Koppelelementes eine größere Tiefe als das Fenster auf.

Ein entsprechendes Koppelelement ist für einen zweistufigen Einkoppelvorgang ausgebildet, bei welchem auch bei Relativgeschwindigkeiten zwischen einem Zahnrad, welches eine Klaue für die Vertiefung aufweist, und dem Koppelelement ein Einkoppelvorgang möglich ist, indem die Klaue zunächst in das Fenster eindringt, anschließend im Fenster durch ein Anliegen an einem Ende des Fensters auf die Geschwindigkeit des Koppelelementes gebracht wird, wonach die Klaue in die Vertiefung eindringen kann. Üblicherweise wird ein derartiges Koppelelement in einem erfindungsgemäßen Antrieb eingesetzt.

Bevorzugt ist vorgesehen, dass das Koppelelement als Klauenscheibe ausgebildet ist, welche insbesondere gegenüber einer Mittelebene etwa symmetrisch ist. Die Klauenscheibe kann dann zwischen zwei Gängen bzw. zwischen zwei Zahnradpaarungen, welche jeweils Gänge bilden, auf einer Abtriebswelle angeordnet sein, um wahlweise einen der beiden Gänge durch eine Axialverschiebung der Klauenscheibe mit der Abtriebsscheibe zu verbinden, indem Klauen an den Zahnrädern der Gänge in die Vertiefungen eingeführt werden. Die Mittelebene ist dann normal zu einer Drehachse, um welche die Klauenscheibe drehbar im Getriebe angeordnet ist bzw. einer Drehachse der Abtriebswelle. Stirnseiten der Klauenscheibe sind dann üblicherweise parallel zur Mittelebene. Es kann auch vorgesehen sein, dass die Fenster an den beiden Stirnseiten derart angeordnet sind, dass sich eine Vertiefung durch die Klauenscheibe erstreckt und von beiden Stirnseiten aus zugänglich und gleichzeitig in Fenstern auf beiden Stirnseiten angeordnet ist. Dadurch ist eine besonders schmale Klauenscheibe und somit ein Getriebe mit geringem Platzbedarf möglich.

Um das Koppelelement auf einfache Weise mit einer Antriebswelle oder einer Abtriebswelle verbinden zu können, ist es günstig, wenn das Koppelelement eine Innenverzahnung für eine formschlüssige Koppelung mit einer Abtriebswelle aufweist. Das Koppelelement kann dann auf einfache Weise in Umfangsrichtung formschlüssig mit der Abtriebswelle verbunden sein, sodass eine Rotationsbewegung der Abtriebswelle schlupffrei auf das Koppelelement übertragbar ist. Gleichzeitig kann das Koppelelement entlang einer Achsrichtung verschoben werden, wenn das Koppelelement auf der Abtriebswelle in Umfangsrichtung formschlüssig angeordnet ist, um verschiedene Zahnräder über das Koppelelement mit der Abtriebswelle verbinden zu können. Es versteht sich, dass die Abtriebswelle dann üblicherweise für einen Formschluss eine entsprechende Außenverzahnung aufweist, wobei die einzelnen Zähne achsparallel angeordnet bzw. als Geradverzahnung ausgebildet sind.

Das bevorzugt als Klauenscheibe ausgebildete Koppelelement ist üblicherweise um eine Drehachse bzw. eine Achsrichtung drehbar lagerbar und kann an einem zur Drehachse rotationssymmetrischen Außenumfang eine Rille aufweisen, welche als Führung für eine Schaltgabel dienen kann, um das Koppelelement axial entlang der Achsrichtung zu verschieben.

Günstig ist es, wenn das Koppelelement über eine Feder betätigbar ist. Eine Verschiebung des Koppelelementes über eine Feder entlang der Achsrichtung hat sich bewährt, um das Koppelelement auf einfache Weise in formschlüssige Verbindung mit einer Klaue des Zahnrades zu bringen. So wird über die Feder eine axiale Kraft aufgebracht, welche eine Stirnseite des Koppelelementes gegen eine Klaue an einem Zahnrad drückt. Wenn eine Relativbewegung zwischen Zahnrad und Koppelelement bewirkt, dass sich ein Fenster des Koppelelementes im Bereich der Klaue befindet, wird durch die über die Feder aufgebrachte Axialkraft eine axiale Bewegung der Klaue in die Vertiefung der Klauenscheibe bewirkt. Dadurch wird ein geringer Verschleiß bei gleichzeitig rascher Schaltdauer gewährleistet.

Die weitere Aufgabe wird erfindungsgemäß durch ein Verfahren der eingangs genannten Art gelöst, mit welchem ein erfindungsgemäßer Antrieb betrieben wird, bei welchem eine Drehzahl des Elektromotors mittels einer elektrischen Synchronisiereinrichtung während einer Dauer des Schaltvorganges etwa auf eine zweite Drehzahl geändert wird, indem der Elektromotor beschleunigt oder gebremst wird, wobei die zweite Drehzahl der ersten Drehzahl multipliziert mit dem Quotienten aus zweitem Übersetzungsverhältnis und erstem Übersetzungsverhältnis entspricht, wonach die Antriebswelle mit der Abtriebswelle mittels eines Formschlusses rotatorisch gekoppelt wird.

Erfindungsgemäß wurde somit eine mechanische Synchronisierung, welche üblicherweise mit einer Umwandlung von kinetischer Energie in Wärme verbunden ist, im Wesentlichen durch eine elektrische Synchronisierung ersetzt, welche bei Elektromotoren auf einfache Weise möglich ist. Dadurch kann das Verfahren mit weniger Reibung, somit effizienter, und gleichzeitig mit einem einfacheren Antrieb umgesetzt werden. Durch die Koppelung mittels eines Formschlusses, welcher vorzugsweise durch ein Einführen von einem oder mehreren Vorsprüngen in ein oder mehrere Fenster erfolgt, ist ein besonders rascher und reibungsarmer Gangwechsel möglich, sodass ein Antrieb mit einem hohen Komfort und nicht wahrnehmbaren Zugkraftunterbrechungen möglich ist, welcher insbesondere bei einer Anwendung in einem Elektrofahrzeug vorteilhaft ist.

Günstig ist es, wenn eine Energie zum Beschleunigen des Elektromotors aus einem Akkumulator entnommen wird. Der Elektromotor kann sowohl als Gleichstrommotor als auch als Wechselstrom-, Synchron- oder Asynchronmotor ausgebildet sein. Das Verfahren kann mit einem Antrieb in einem Fahrzeug somit auf einfache Weise umgesetzt werden, wobei der Akkumulator durch den Antrieb mit dem Fahrzeug bewegt wird. Günstig ist es, wenn beim Abbremsen kinetische Energie in elektrische Energie gewandelt und zumindest teilweise in einem Akkumulator gespeichert wird. Üblicherweise ist der Akkumulator, in welchem die generatorisch beim Abbremsen erzeugte elektrische Energie gespeichert wird, ident mit dem genannten Akkumulator, aus welchem Energie zum Beschleunigen des Elektromotors beim Herunterschalten entnommen wird.

Weitere Merkmale, Vorteile und Wirkungen der Erfindung ergeben sich anhand des nachfolgend dargestellten Ausführungsbeispiels. In den Zeichnungen, auf welche dabei Bezug genommen wird, zeigen:
Fig. 1 bis 3 einen erfindungsgemäßen Antrieb in schematischer Darstellung;
Fig. 4 bis 6 ein erfindungsgemäßes Koppelelement in unterschiedlichen Ansichten;
Fig. 7 bis 9 ein Zahnrad eines Ganges eines erfindungsgemäßen Antriebes in unterschiedlichen Ansichten;
Fig. 10 bis 12 verschiedene Verfahrensschritte eines Auskuppelvorganges im Detail.

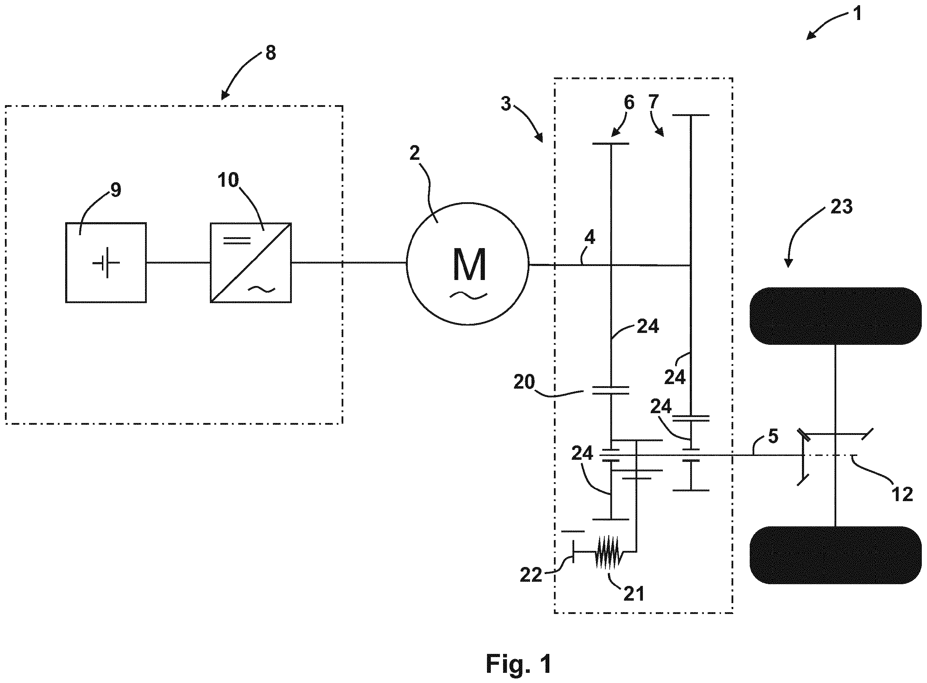

Fig. 1 bis 3 zeigen in schematischer Darstellung einen erfindungsgemäßen Antrieb 1 in unterschiedlichen Arbeitszuständen. Wie ersichtlich weist der Antrieb 1 einen beispielsweise als Synchronmotor ausgebildeten Elektromotor 2 auf, welcher auf eine Antriebswelle 4 eines Getriebes 3 wirkt. Das Getriebe 3 weist im dargestellten Ausführungsbeispiel zwei Gänge 6, 7 mit unterschiedlichen Übersetzungen auf, welche durch zwei Zahnradpaare gebildet werden, wobei jeweils ein Zahnrad 24 jeder Zahnradpaarung drehfest mit der Antriebswelle 4 verbunden ist. Ein erstes Zahnradpaar bildet dabei einen ersten Gang 6, welcher eine Übersetzung von einer Drehzahl der Antriebswelle 4 auf eine Drehzahl der Abtriebswelle 5 von etwa 0,5 aufweist. Ein zweiter Gang 7 wird durch ein zweites Zahnradpaar gebildet, bei welchem die Übersetzung etwa 0,2 beträgt. Anders ausgedrückt rotiert die Abtriebswelle 5 bei eingelegtem zweiten Gang 7 etwa fünfmal um die eigene Achse, während in der gleichen Zeit die Antriebswelle 4 nur ein einziges Mal um die eigene Achse rotiert, sodass der Elektromotor 2 langsamer als die Abtriebswelle 5 dreht. Es versteht sich, dass das Getriebe 3 praktisch mit beliebigen Übersetzungen, welche größer und kleiner als 1 sein können, umgesetzt werden kann, sodass es sich sowohl um Übersetzungen als auch um Untersetzungen bzw. eine Übersetzung ins Langsame handeln kann.

Um eine kinematische Überbestimmung zu vermeiden, kann nur maximal einer der beiden Gänge 6, 7 auch mit der Abtriebswelle 5 gekoppelt sein, und erfolgt ein Gangwechsel durch ein Auskuppeln eines Ganges und ein Einkuppeln des anderen Ganges. Dies wird konstruktiv dadurch erreicht, dass die abtriebsseitigen Zahnräder 24 der Zahnradpaare lösbar drehfest mit der Abtriebswelle 5 verbindbar sind, und zwar über ein in axialer Richtung auf der Abtriebswelle 5 verschiebbares Koppelelement. Das Koppelelement ist drehfest mit der Abtriebswelle 5 verbunden und in Umfangsrichtung 11 formschlüssig mit jedem einzelnen der abtriebsseitigen Zahnräder 24 der Zahnradpaarungen verbindbar, insbesondere über eine Klauenverbindung, sodass die abtriebsseitigen Zahnräder 24 über das Koppelelement drehfest mit der Abtriebswelle 5 verbindbar sind. Fig. 1 zeigt dabei einen Zustand, bei welchem das Koppelelement das abtriebsseitige Zahnrad 24 des ersten Ganges 6 drehfest mit der Abtriebswelle 5 verbindet, sodass in diesem Betriebszustand der erste Gang 6 eingelegt ist und die Übersetzung zwischen Antriebswelle 4 und Abtriebswelle 5, also ein Quotient aus einer Drehzahl der Antriebswelle 4 zu einer Drehzahl der Abtriebswelle 5, etwa 0,5 beträgt.

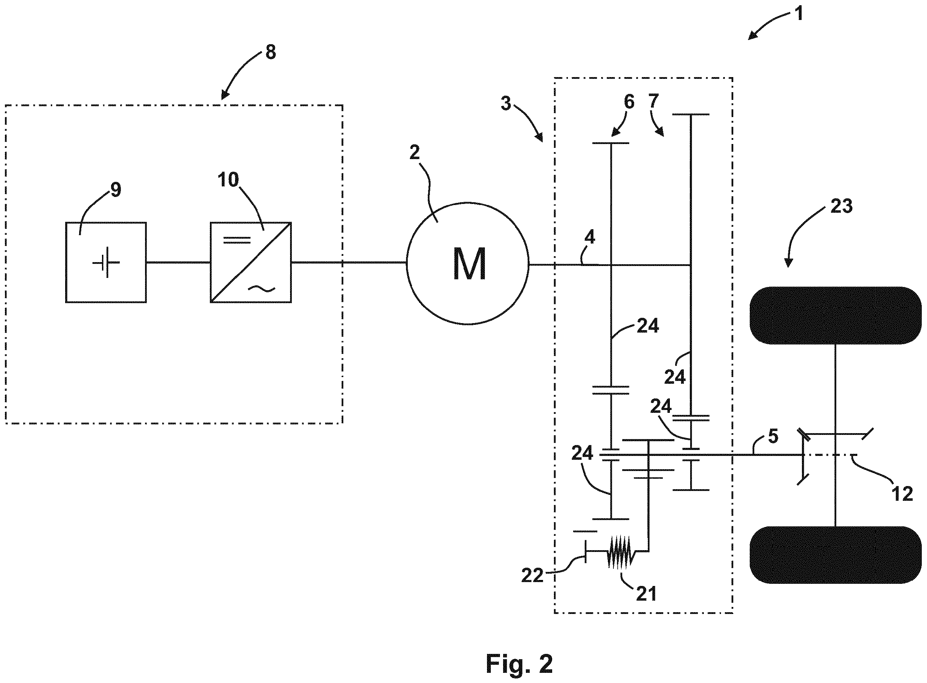

Fig. 2 zeigt einen Zustand des Getriebes 3 während eines Gangwechsels, in welchem sich das Koppelelement axial zwischen den beiden Gängen 6, 7 befindet, sodass kein Gang eingelegt ist und die Antriebswelle 4 mit der Abtriebswelle 5 in Umfangsrichtung 11 nicht gekoppelt ist.

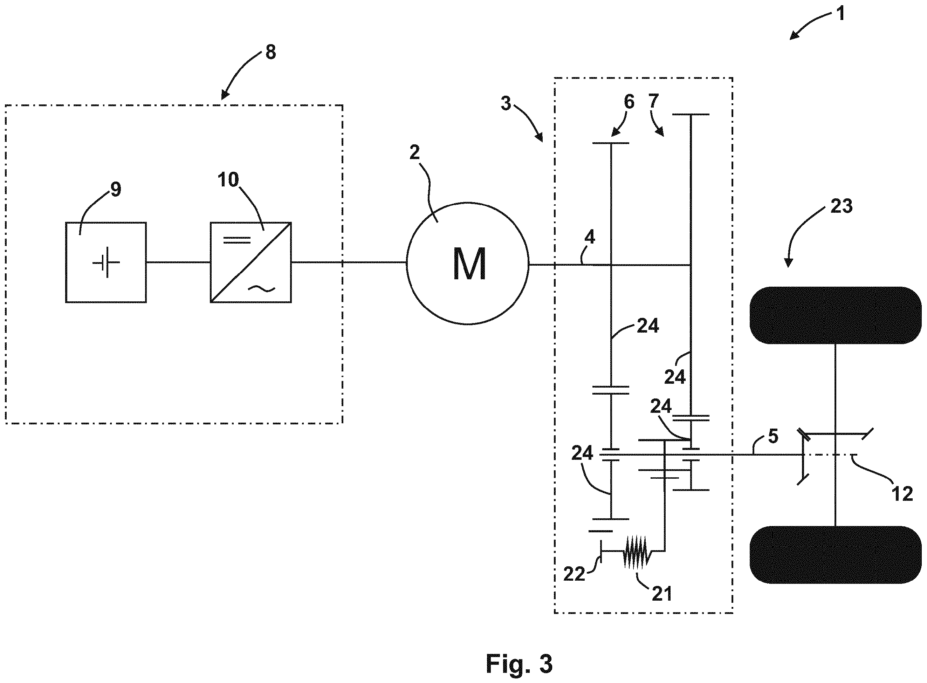

Fig. 3 zeigt das Getriebe 3 in einem Zustand, in welchem der zweite Gang 7 eingelegt ist, sodass eine Übersetzung einer Drehzahl der Antriebswelle 4 auf eine Drehzahl der Abtriebswelle 5 etwa 0,2 beträgt.

Der dargestellte Antrieb 1 kann beispielsweise wie in Fig. 1 bis 3 angedeutet in einem Fahrzeug angeordnet sein, sodass die Abtriebswelle 5 des Getriebes 3 auf angetriebene Räder 23 des Fahrzeuges wirkt, um das Fahrzeug beispielsweise auf einer Straße anzutreiben. Während eines Schaltvorganges, welcher eine Dauer von beispielsweise 150 ms haben kann, bleibt eine Drehzahl der Abtriebswelle 5 insbesondere aufgrund einer Trägheit des Fahrzeuges im Wesentlichen konstant. Bei einem Hochschaltvorgang vom ersten Gang 6 in den zweiten Gang 7 ist somit für einen komfortablen Schaltvorgang ein Abbremsen der Antriebswelle 4 erforderlich, um einen Ruck oder dergleichen beim Einkuppeln des zweiten Ganges 7 zu vermeiden. Bei Antrieben 1 des Standes der Technik erfolgt dies über Synchronringe oder dergleichen, also ein mechanisches Beschleunigen bzw. Bremsen der Antriebswelle 4, wodurch im Getriebe 3 kinetische Energie in thermische Energie gewandelt wird.

Beim erfindungsgemäßen Antrieb 1 erfolgt eine entsprechende Synchronisierung im Wesentlichen elektrisch durch eine elektrische Synchronisiereinrichtung 8, welche den Elektromotor 2, welcher zu Beginn des Schaltvorganges wie in Fig. 1 dargestellt eine erste Drehzahl aufweist, nach einem Auskuppeln des ersten Ganges 6 etwa auf eine zweite Drehzahl beschleunigt bzw. abbremst, welche zweite Drehzahl der ersten Drehzahl multipliziert mit einem Quotienten aus zweitem Übersetzungsverhältnis und erstem Übersetzungsverhältnis entspricht. Wenn die Drehzahl des Elektromotors 2 somit bei dem in Fig. 1 dargestellten Beginn des Schaltvorganges 1000 min-1 beträgt, wird diese während des Schaltvorganges, nach Auskuppeln des ersten Ganges 6 und vor Einkuppeln des zweiten Ganges 7 durch die elektrische Synchronisiereinrichtung 8, auf eine zweite Drehzahl von 1000 . 0,2/0,5 = 400 min-1 abgebremst, sodass bei einer Verbindung des Koppelelementes mit dem abtriebsseitigen Zahnrad 24 des zweiten Zahnradpaares nahezu keine Relativgeschwindigkeit zwischen diesem Zahnrad 24 und dem mit der Winkelgeschwindigkeit der Abtriebswelle 5 rotierenden Koppelelement besteht. Dadurch muss im Getriebe 3 kinetische Energie allenfalls zu einem sehr geringen Anteil in Wärme gewandelt werden, während die beim Abbremsen des Elektromotors 2 freiwerdende kinetische Energie überwiegend oder gänzlich über die elektrische Synchronisiereinrichtung 8 in elektrische Energie gewandelt und gespeichert wird. Hierzu weist die elektrische Synchronisiereinrichtung 8 einen Wechselrichter 10 oder Drehstromsteller und einen mit diesem verbundenen Akkumulator 9 auf, sodass beim Abbremsen durch einen generatorischen Betrieb des Elektromotors 2 erzeugte elektrische Energie auch gespeichert werden kann, beispielsweise um den Elektromotor 2 bei einem späteren Schaltvorgang vom zweiten Gang 7 in den ersten Gang 6 entsprechend auf ein 2,5-faches der Drehzahl zu beschleunigen. Das Koppelelement kann somit sehr einfach, beispielsweise als mit Klauen 14 der Zahnräder 24 korrespondierende Klauenscheibe 13 aus einem Einsatzstahl oder dergleichen ausgebildet sein.

Um ein zuverlässiges Einrasten des hier als Klauenscheibe 13 ausgebildeten Koppelelementes bei gleichzeitig geringen Reibungsverlusten zu gewährleisten, ist die Klauenscheibe 13 im Ausführungsbeispiel mittels eines Aktuators 22, beispielsweise eines Linearmotors, über eine Feder 21 betätigbar. Somit kann über die Feder 21 ein einfach definierbarer Druck auf eine Stirnseite 25 des Zahnrades 24, mit welchem die Klauenscheibe 13 verbunden werden soll, aufgebracht werden, sodass bei einer Relativposition von Zahnrad 24 und Klauenscheibe 13, bei welcher sich die Klaue 14 des Zahnrades 24 in einem Bereich eines in der Stirnseite 25 angeordneten Fensters 15 befindet, die Klauenscheibe 13 in axialer Richtung auf das Zahnrad 24 zu bewegt wird, sodass die Klaue 14 in das Fenster 15 eingeführt wird, in welchem eine mit der Klaue 14 korrespondierende Vertiefung 16 angeordnet ist.

Anstelle der Klauen 14 können selbstverständlich auch andere Einrichtungen, insbesondere ein oder mehrere Vorsprünge, zur Herstellung einer formschlüssigen rotatorischen Verbindung vorgesehen sein. Weiter können die Klauen 14 natürlich alternativ oder ergänzend auch im Koppelelement und die mit den Klauen 14 zusammenwirkenden Vertiefungen 16 in den Zahnrädern 24 oder mit den Zahnrädern 24 drehfest verbundenen Elementen angeordnet sein. Als rotatorische Verbindung wird eine Verbindung verstanden, bei welcher eine Rotation der Antriebswelle 4 in zumindest einer Rotationsrichtung zwingend eine Rotation der Abtriebswelle 5 bewirkt, gegebenenfalls mit anderer Geschwindigkeit.

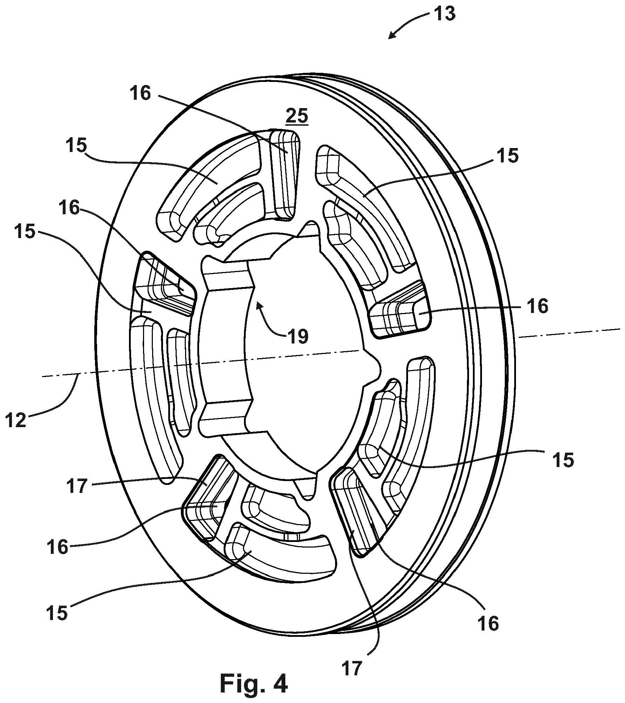

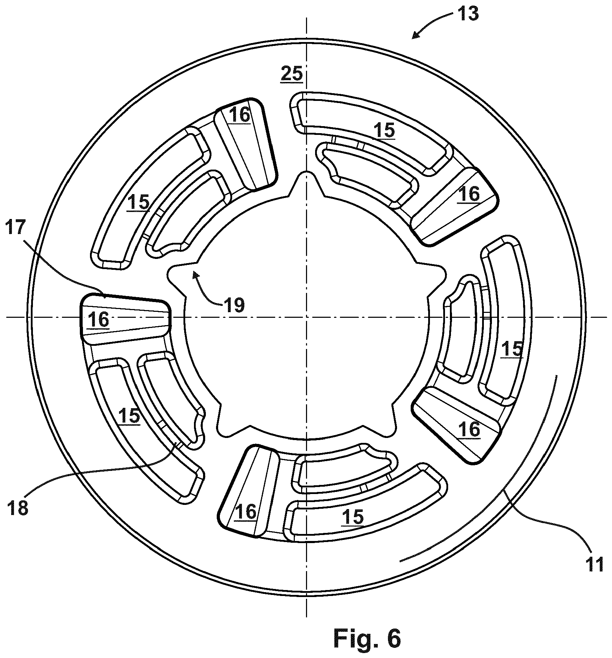

Fig. 4 bis 6 zeigen ein als Klauenscheibe 13 ausgebildetes erfindungsgemäßes Koppelelement im Detail in unterschiedlichen Ansichten, welches beispielsweise in den in den Fig. 1 bis 3 dargestellten Antrieb 1 einsetzbar ist. Wie dargestellt weist die Klauenscheibe 13 an einem Innendurchmesser eine Innenverzahnung 19 auf, um in Umfangsrichtung 11 formschlüssig mit der Abtriebswelle 5 verbunden zu werden. Die Zähne der Innenverzahnung 19 sind parallel zu einer Achse ausgerichtet, sodass die Klauenscheibe 13 auf der Abtriebswelle 5 in Achsrichtung 12 verschoben werden kann, um eine formschlüssige Verbindung zwischen der Abtriebswelle 5 und unterschiedlichen, beispielsweise entlang der Achsrichtung 12 koaxial zur Abtriebswelle 5 angeordneten, Zahnrädern 24 herzustellen.

Die Klauenscheibe 13 ist scheibenförmig ausgebildet und weist zwei Stirnseiten 25 auf, welche etwa normal zur Achse sind, wobei jede Stirnseite 25 fünf Fenster 15 enthält, in welchen an einem Ende des Fensters 15 in Umfangsrichtung 11 jeweils eine Vertiefung 16 angeordnet ist. Die fünf Vertiefungen 16 korrespondieren mit fünf Klauen 14 der abtriebsseitigen Zahnräder 24, mit welchen die Klauenscheibe 13 im Getriebe 3 verbindbar ist, um das Zahnrad 24 formschlüssig und im Wesentlichen spielfrei mit der Klauenscheibe 13 zu verbinden.

Die Fenster 15 weisen dabei jeweils einen Boden 28 auf, welcher einen Abstand zur Stirnfläche aufweist, welcher Abstand geringer ist als eine maximale Tiefe der Vertiefungen 16 bzw. geringer als ein Abstand einer gedachten Einrastebene, in welcher Einrastebene sich ein axiales Ende der Klaue 14 bzw. eine Deckfläche 29 der Klaue 14 befindet, wenn sich die Klaue 14 in der Vertiefung 16 befindet und die Antriebswelle 4 mit der Abtriebswelle 5 gekoppelt ist. Das Fenster 15 bzw. der Boden 28 des Fensters 15 bildet somit eine Zwischenebene, welche zwischen einer Ebene der Stirnseite 25 und der Einrastebene bzw. der Vertiefung 16 liegt, sodass die Klaue 14 zunächst mittels einer axialen Bewegung in das Fenster 15 bis zum Boden 28 eingeführt werden können, wonach die Klauen 14 mit einer weiteren Bewegung in derselben axialen Richtung in die Vertiefung 16 eingeführt werden können, in welcher die Klaue 14 in der Regel drehfest, gegebenenfalls unter Beibehaltung eines Spiels, formschlüssig mit der Vertiefung 16 gekoppelt ist. Es versteht sich, dass der Boden 28 zwar bevorzugt etwa eben und wie dargestellt parallel zur Stirnseite 25 ausgebildet ist, jedoch grundsätzlich auch nicht eben und nicht parallel zur Stirnseite 25 sein kann. Weiter kann der Boden 28 das gesamte Fenster 15 ausfüllen oder wie hier nur einen Teil des Fensters 15, um die Klaue 14 zur Vertiefung 16 zu führen, und können neben dem Boden 28 weitere Aussparungen im Fenster 15 vorgesehen sein, um ein Gewicht zu optimieren.

Das Fenster 15 ist in Umfangsrichtung 11 größer als die Vertiefung 16 ausgebildet und weist in radialer Richtung eine Erstreckung auf, welcher zumindest der Erstreckung der Klaue 14 entspricht, sodass die Klaue 14 in das Fenster 15 eingeführt werden kann. Das Fenster 15 kann sich in radialer Richtung jedoch auch darüber hinaus erstrecken. Insbesondere kann sich das Fenster 15 in radialer Richtung über das gesamte Koppelelement bzw. die gesamte Stirnseite 25 erstrecken. Anstelle des Begriffes Fenster 15 kann daher auch der im Sinne dieser Anmeldung gleichwertige Begriff Ausnehmung in der Stirnseite 25 oder Vorvertiefung verwendet werden.

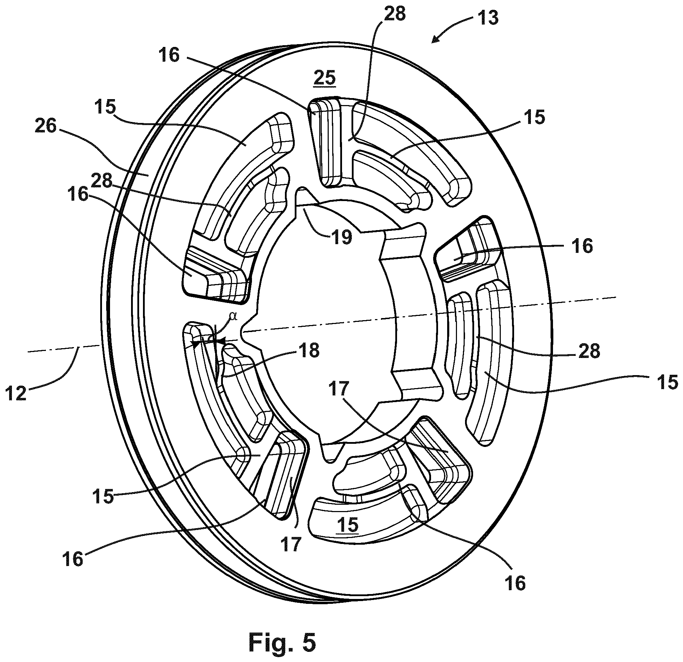

An einer bezüglich der Achse bevorzugt etwa zylinderförmigen Außenkontur der Klauenscheibe 13 ist wie in Fig. 5 ersichtlich eine umlaufende Rille 26 vorgesehen, in welche für eine Axialverschiebung der Klauenscheibe 13 auf einer Abtriebswelle 5 eine Schaltgabel eingreifen kann. Die Schaltgabel kann manuell betätigbar oder zur Bildung eines Automatikgetriebes direkt oder über eine Feder 21 mit einem Aktuator 22 verbunden sein.

Die Fenster 15 dienen dazu, ein Einkuppeln bzw. die Herstellung einer formschlüssigen Verbindung zwischen der Klauenscheibe 13 und dem Zahnrad 24 auch dann einfach zu ermöglichen, wenn das Zahnrad 24 eine von der Klauenscheibe 13 verschiedene Geschwindigkeit aufweist. So wird bei einem Koppelvorgang auf die Klauenscheibe 13 eine axiale Kraft, üblicherweise über eine Feder 21, in Richtung des Zahnrades 24 aufgebracht. Durch eine Regelung des Elektromotors 2 ist weiter sichergestellt, dass eine Geschwindigkeit der Klauenscheibe 13 relativ zur Geschwindigkeit des Zahnrades 24 derart bemessen ist, dass dann, wenn sich die Klauen 14 in den Fenstern 15 befinden, die Klauen 14 zum Anschlag 17 an dem Ende des Fensters 15 bewegt werden, an welchem Ende sich auch die Vertiefungen 16 befinden, sodass durch eine weitere axiale Kraft, welche üblicherweise wie in Fig. 1 bis 3 dargestellt über eine Feder 21 aufgebracht wird, die Vertiefungen 16 über die Klauen 14 geschoben werden bzw. die Klauen 14 in die Vertiefungen 16 eingeführt werden, in welchen diese dann im Wesentlichen spielfrei angeordnet sind. Dadurch ist eine einfache und gleichzeitig zuverlässige Koppelung der Klauenscheibe 13 mit den Zahnrädern 24 gewährleistet, um unterschiedliche Gänge 6, 7 bzw. Zahnradpaarungen unterschiedlicher Gänge 6, 7 mit einer Antriebswelle 4 oder einer Abtriebswelle 5 eines Getriebes 3 zu verbinden. Wie ersichtlich erstrecken sich die Vertiefungen 16 durch die Klauenscheibe 13, sodass diese von beiden Stirnseiten 25 aus zugänglich sind. Dadurch kann die Klauenscheibe 13 sehr schmal und somit das Getriebe 3 mit kleinem Bauraum ausgebildet sein.

An dem umfangsseitigen Ende der Fenster 15, welches den Enden der Fenster 15 gegenüberliegen, an welchen die Vertiefungen 16 angeordnet sind, sind in den Fenstern 15 Rampen 18 angeordnet, sodass bei einem Softwarefehler ein Einkoppeln der Vertiefungen 16 in die Fenster 15 auf zuverlässige und gleichzeitig einfache Weise vermieden ist. Eine Rampe 18 weist hier einen Winkel α von etwa 30° gegenüber der Stirnseite 25 auf, sodass die Klaue 14 zuverlässig aus dem Fenster 15 geführt wird.

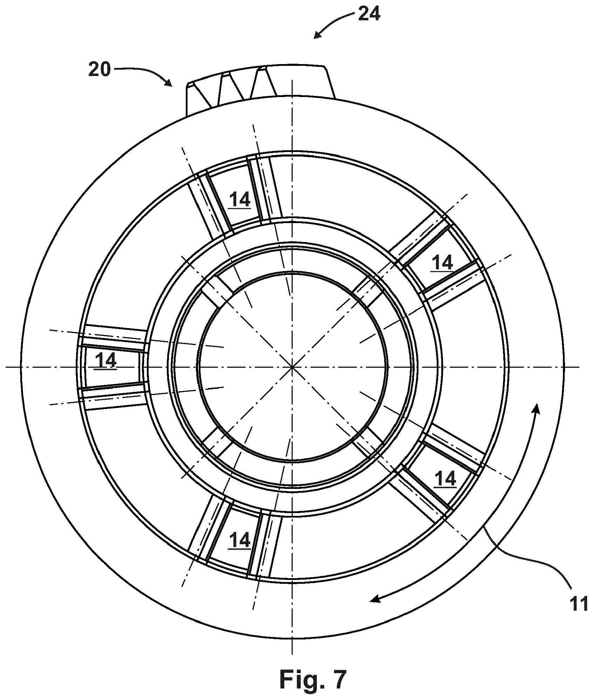

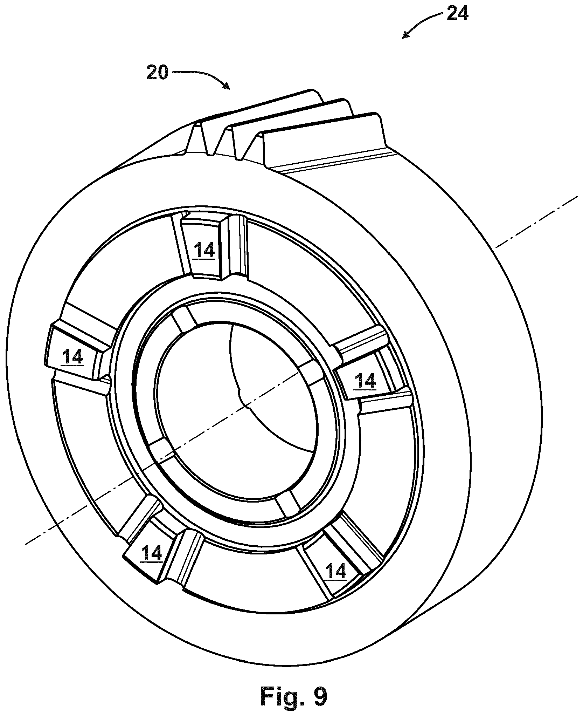

Fig. 7 bis 9 zeigen schematisch ein abtriebsseitiges Zahnrad 24 des ersten Ganges 6 oder des zweiten Ganges 7 bzw. der den ersten Gang 6 oder den zweiten Gang 7 bildenden Zahnradpaarung. Wenngleich nur drei Zähne dargestellt sind, versteht es sich, dass das Zahnrad 24 umfangsseitig vollumfänglich Zähne aufweist, welche parallel zur Achse oder wie dargestellt als Schrägverzahnung ausgebildet sein können. Diese Zähne sind im Getriebe 3 in Eingriff mit Zähnen des bei dem in Fig. 3 dargestellten Antrieb 1 drehfest mit der Antriebswelle 4 verbundenen Zahnrades 24. Das dargestellte Zahnrad 24 weist weiter an einer Stirnseite 25 fünf Klauen 14 auf, welche mit den Vertiefungen 16 der Klauenscheibe 13 korrespondieren und in die Vertiefungen 16 einrasten können, um das abtriebsseitige Zahnrad 24 drehfest mit der Abtriebswelle 5 zu verbinden, und somit die Antriebswelle 4 über den entsprechenden Gang mit der Abtriebswelle 5 zu verbinden.

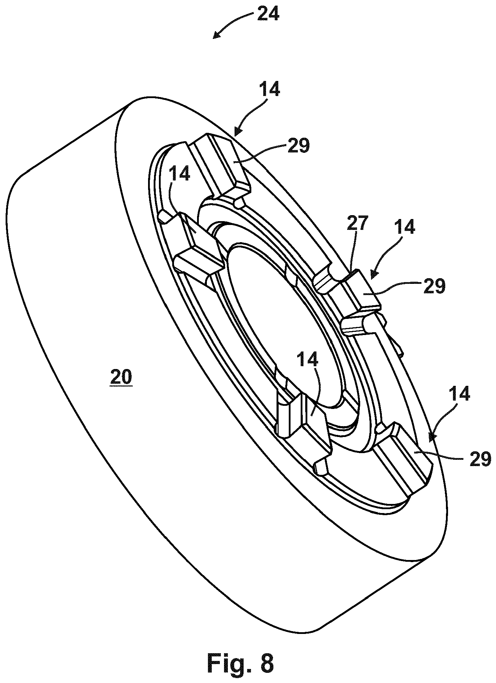

Wie in Fig. 8 ersichtlich weisen die Klauen 14 an umfangsseitigen Kanten Fasen 27 auf, wobei ein Winkel α der Fasen 27 mit einem Winkel α der Rampe 18 korrespondiert. Wie weiter ersichtlich weisen die Klauen 14 an einem oberen Ende bzw. einem axialen Ende eine Deckfläche 29 auf, welche in Bezug auf die Ausrichtung mit einer Ausrichtung des Bodens 28 des Fensters 15 korrespondiert. Dadurch ist bei einem Einkuppelvorgang ein durchgängiger Flächenkontakt zwischen der Klaue 14 und der Klauenscheibe 13 möglich, und zwar zunächst zwischen der Fase 27 und der Rampe 18 und anschließend, wenn die Klaue 14 den Boden 28 des Fensters 15 erreicht hat, zwischen der Deckfläche 29 und dem Boden 28 des Fensters 15, bis die Klaue in die Vertiefung einrastet.

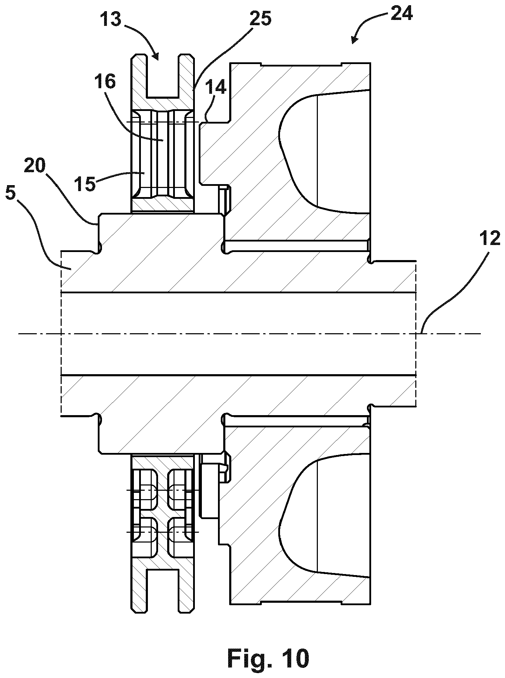

Fig. 10 bis 12 zeigen einen Einkoppelvorgang in unterschiedlichen Verfahrenszuständen, in welchem ein in den Fig. 7 bis 9 dargestelltes Zahnrad 24 drehfest mit einer Klauenscheibe 13 gemäß Fig. 4 bis 6 drehfest verbunden wird.

Dargestellt sind jeweils die Abtriebswelle 5 einer Außenverzahnung 20, auf welcher die Klauenscheibe 13 in axialer Richtung bewegbar sowie drehfest mit der Abtriebswelle 5 verbunden angeordnet ist sowie ein Zahnrad 24 einer Zahnradpaarung, welches über die Klauenscheibe 13 mit der Abtriebswelle 5 verbunden wird.

In dem in Fig. 10 dargestellten Zustand ist die Klauenscheibe 13 vom Zahnrad 24 beabstandet, sodass das Zahnrad 24 kinematisch in Umfangsrichtung 11 nicht mit der Abtriebswelle 5 gekoppelt ist. Anders ausgedrückt ist der entsprechende Gang nicht eingelegt.

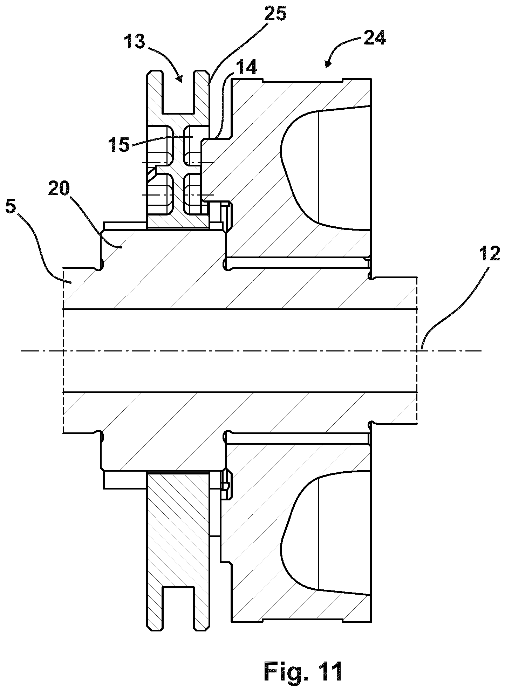

Fig. 11 zeigt einen Zustand, in welchem die Klauenscheibe 13 axial zum Zahnrad 24 hin bewegt wurde. Die Klaue 14 ist in diesem Zustand bereits im Fenster 15 der Klauenscheibe 13 positioniert, jedoch noch nicht in die Vertiefung 16 eingerastet. Nachdem das Fenster 15 in Umfangsrichtung 11 größer als die Klaue 14 ist, ist somit noch eine Relativbewegung zwischen der Klauenscheibe 13 bzw. der Abtriebswelle 5, welche drehfest mit der Klauenscheibe 13 verbunden ist, und dem Zahnrad 24 möglich.

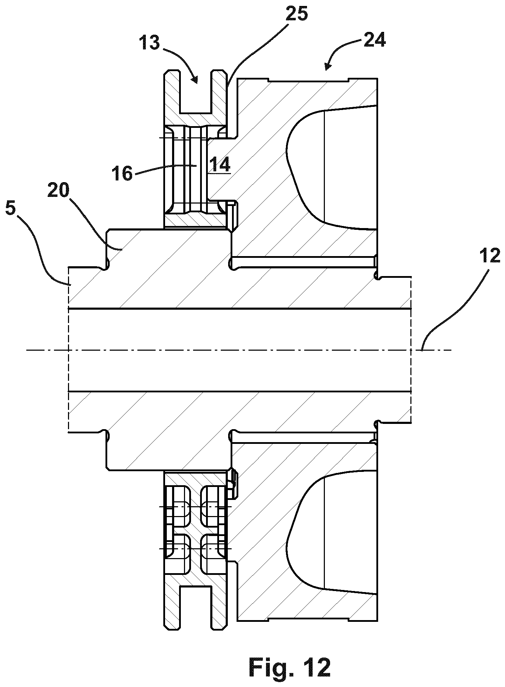

Fig. 12 zeigt einen voll eingekoppelten Zustand, in welchem die Klauen 14 des Zahnrades 24 in den Vertiefungen 16 der Klauenscheibe 13 angeordnet sind, sodass eine drehfeste und im Wesentlichen spielfreie Verbindung gegeben ist. In Umfangsrichtung 11 sind die Klauen 14 dann am Anschlag 17 in den Fenstern 15 positioniert. Nachdem die Vertiefungen 16 mit den Klauen 14 korrespondieren, sind die Klauen 14 im Wesentlichen spielfrei in den Vertiefungen 16 angeordnet, sodass keine Relativbewegung mehr möglich ist. Als im Wesentlichen spielfreie Verbindung kann dabei auch eine Verbindung angesehen, bei welcher ein Spiel von weniger als 5°, insbesondere weniger als 2°, und/oder eine Spiel von weniger als 20 mm, insbesondere weniger als 10 mm, vorzugsweise weniger als 5 mm, in Umfangsrichtung 11 möglich ist. Dadurch ist insbesondere die Einbringung einer einen Hinterschnitt aufweisenden Klaue 14 in die Vertiefung 16 leicht möglich.

Es versteht sich, dass ein abtriebsseitiges Zahnrad 24 eines weiteren Ganges, welches hier zur besseren Veranschaulichung nicht dargestellt ist, an der zweiten Stirnseite 25 der Klauenscheibe 13 positioniert sein kann, sodass mittels einer Verschiebung der Klauenscheibe 13 wahlweise einer der beiden Gänge 6, 7 mit der Abtriebswelle 5 verbunden werden kann. Weiter ist es möglich, die Klauenscheibe 13 in einer in Fig. 11 dargestellten Mittelposition zu positionieren, in welcher keiner der beiden Gänge 6, 7 eingelegt ist.

Die beiden Gänge 6, 7 werden üblicherweise durch Zahnradpaarungen mit unterschiedlichen Übersetzungen gebildet, welche dauerhaft drehfest mit der Antriebswelle 4 und abwechselnd über die Klauenscheibe 13 mit der Abtriebswelle 5 verbunden sein können.

Während eines Schaltvorganges von einem Gang zu einem anderen wird der Elektromotor 2 elektrisch beschleunigt oder gebremst, um eine nahezu synchrone Drehzahl zwischen der Klauenscheibe 13 und dem Zahnrad 24, welches über die Klauenscheibe 13 mit der Abtriebswelle 5 verbunden werden soll, herzustellen. Üblicherweise erfolgt ein entsprechender Schaltvorgang in weniger als einer Sekunde, vorzugsweise innerhalb von weniger als 150 Millisekunden, sodass der Elektromotor 2 in einer entsprechend kurzen Zeit beschleunigt bzw. gebremst werden muss. In der Regel erfolgt dies über einen Wechselrichter 10 und einen Akkumulator 9, in welchem elektrische Energie eingespeichert bzw. aus welchem elektrische Energie entnommen werden kann, um die Drehzahländerung zu bewirken.

Nachdem die Synchronisierung elektrisch erfolgt, kann auf Reibungsflächen im Getriebe 3 weitestgehend verzichtet werden, sodass das Getriebe 3 einfach ausgebildet sein kann, üblicherweise durch aus einem Einsatzstahl oder dergleichen bestehende Bauteile. Weiter ist aufgrund der elektrischen Synchronisierung eine geringe Kühlleistung ausreichend, sodass auch ein Getriebegehäuse einfach aufgebaut sein kann.

Mit einem erfindungsgemäßen Antrieb 1 ist ein Umschaltvorgang zwischen Gängen 6, 7 eines Antriebes 1, welcher beispielsweise in einem Elektrofahrzeug angeordnet sein kann, auf einfache Weise möglich. Der Antrieb 1 kann besonders kostengünstig und gleichzeitig robust ausgebildet sein, weil die Funktion der Synchronisierung im Wesentlichen aus dem mechanischen Bereich des Getriebes 3 entnommen und in den elektrischen Teil verschoben wurde.

## Patentansprüche

1. Antrieb (1) mit einem Elektromotor (2) und einem Getriebe (3), mit welchem der Elektromotor (2) an einer Antriebswelle (4) verbunden ist, insbesondere für ein Elektrofahrzeug, wobei das Getriebe (3) zumindest zwei Gänge (6, 7) mit unterschiedlichen Übersetzungen aufweist, über welche eine Abtriebswelle (5) mit der Antriebswelle (4) abwechselnd koppelbar ist, um unterschiedliche Übersetzungsverhältnisse von einer Drehzahl der Antriebswelle (4) auf eine Drehzahl der Abtriebswelle (5) zu erreichen, wobei das Getriebe (3) zur Durchführung eines Schaltvorganges ausgebildet ist, bei welchem zunächst eine Koppelung der durch den mit einer ersten Drehzahl rotierenden Elektromotor (2) angetriebenen Antriebswelle (4) mit der Abtriebswelle (5) über einen ersten Gang (6) mit einem ersten Übersetzungsverhältnis gelöst wird, sodass die Antriebswelle (4) mit der Abtriebswelle (5) nicht mehr rotatorisch gekoppelt ist, wonach die Antriebswelle (4) mit der Abtriebswelle (5) über einen zweiten Gang (7) mit einem zweiten Übersetzungsverhältnis rotatorisch gekoppelt wird, wobei eine elektrische Synchronisiereinrichtung (8) vorgesehen ist, mit welcher eine Drehzahl des Elektromotors (2) während einer Dauer des Schaltvorganges auf eine zweite Drehzahl änderbar ist, wobei die zweite Drehzahl der ersten Drehzahl multipliziert mit einem Quotienten aus zweitem Übersetzungsverhältnis und erstem Übersetzungsverhältnis entspricht, wobei der Antrieb (1) zur Herstellung einer lösbaren rotatorischen Koppelung zwischen der Antriebswelle (4) und der Abtriebswelle (5) über den zweiten Gang (7) mittels eines Formschlusses ausgebildet ist, **dadurch gekennzeichnet, dass** die Antriebswelle (4) mit der Abtriebswelle (5) über einen Gang lösbar mittels zumindest einer in eine Vertiefung (16) eingreifende Klaue (14) koppelbar ist, wobei die Vertiefung (16) in einem Fenster (15) angeordnet ist, welches sich entlang einer Richtung erstreckt, entlang welcher ein mit der Antriebswelle (4) gekoppeltes Element relativ zu einem mit der Abtriebswelle (5) gekoppelten Element bewegbar ist, wenn die Abtriebswelle (5) bei einem Schaltvorgang nicht mit der Antriebswelle (4) gekoppelt ist, sodass die Klaue (14) von einem ausgekuppelten Zustand durch das Fenster (15) in die Vertiefung (16) bewegbar ist.

2. Antrieb (1) nach Anspruch 1, **dadurch gekennzeichnet, dass** der Antrieb (1) zur Herstellung einer lösbaren rotatorischen formschlüssigen Verbindung zwischen der Antriebswelle (4) und der Abtriebswelle (5) ein rotierbares erstes Element mit einem Fenster (15), in welchem ein Anschlag (17) angeordnet ist, und ein rotierbares zweites Element mit einem in das Fenster (15) einführbaren Vorsprung, insbesondere einer Klaue (14), aufweist, wobei mittels des Vorsprunges eine Rotationsbewegung vom zweiten Element auf das erste Element formschlüssig übertragbar ist.

3. Antrieb (1) nach Anspruch 1 oder 2, **dadurch gekennzeichnet, dass** der Antrieb (1) zur Durchführung eines Schaltvorganges ausgebildet ist, bei welchem die Dauer des Schaltvorganges weniger als eine Sekunde, insbesondere weniger als 150 ms, beträgt.

4. Antrieb (1) nach einem der Ansprüche 1 bis 3, **dadurch gekennzeichnet, dass** zumindest ein Koppelelement vorgesehen ist, welches in einer ersten Richtung, insbesondere in einer Umfangsrichtung (11), formschlüssig und in einer zweiten Richtung, insbesondere in einer Achsrichtung (12), bewegbar mit der Antriebswelle (4) oder der Abtriebswelle (5) verbunden ist, um zumindest einen Gang lösbar mit der Antriebswelle (4) oder der Abtriebswelle (5) zu verbinden.

5. Antrieb (1) nach einem der Ansprüche 1 bis 4, **dadurch gekennzeichnet, dass** die Klaue und die Vertiefung derart ausgebildet sind, dass die Klaue dann, wenn die Antriebswelle mit der Abtriebswelle gekoppelt ist, relativ zur Vertiefung ein Spiel von weniger als 20 mm, insbesondere weniger als 10 mm, vorzugsweise weniger als 5 mm, aufweist.

6. Antrieb (1) nach einem der Ansprüche 1 bis 5, **dadurch gekennzeichnet, dass** die Vertiefung (16) endseitig am Fenster (15) angeordnet ist.

7. Antrieb (1) nach Anspruch 6, **dadurch gekennzeichnet, dass** die Zahnradpaarungen drehfest mit der Antriebswelle (4) verbunden und über zumindest ein als Klauenscheibe (13) ausgebildetes Koppelelement mit der Abtriebswelle (5) verbindbar sind, wobei die Klauenscheibe (13) formschlüssig in Umfangsrichtung (11) mit der Abtriebswelle (5) verbunden und in einer Achsrichtung (12) relativ zur Abtriebswelle (5) verschiebbar ist.

8. Antrieb (1) nach Anspruch 7, **dadurch gekennzeichnet, dass** die abtriebsseitigen Zahnräder der Zahnradpaarungen jeweils zumindest eine Klaue (14), vorzugsweise zwei bis sieben, insbesondere drei bis fünf, Klauen (14), aufweisen, welche sich in axialer Richtung erstrecken, und mit Vertiefungen (16) in einer Stirnseite (25) der Klauenscheibe (13) korrespondieren.

9. Antrieb (1) nach Anspruch 7 oder 8, **dadurch gekennzeichnet, dass** jede der zu den Klauen (14) korrespondierenden Vertiefungen (16) in der Klauenscheibe (13) in einem entlang einer Umfangsrichtung (11) verlaufenden Fenster (15) angeordnet ist, wobei die Vertiefung (16) in Umfangsrichtung (11) endseitig im Fenster (15) angeordnet ist, wobei bevorzugt vorgesehen ist, dass das Fenster (15) an dem der Vertiefung (16) gegenüberliegenden Ende eine Rampe (18) aufweist.

10. Antrieb (1) nach Anspruch 9, **dadurch gekennzeichnet, dass** die Rampe (18) eine Fläche aufweist, welche unter einem Winkel relativ zu einem Boden des Fensters (15) angeordnet ist und den Boden des Fensters (15) mit der Stirnseite (25) verbindet.

11. Elektrofahrzeug mit einem Antrieb (1), **dadurch gekennzeichnet, dass** der Antrieb (1) nach einem der Ansprüche 1 bis 10 ausgebildet ist.

12. Koppelelement für einen Antrieb (1) nach einem der Ansprüche 1 bis 10, **dadurch gekennzeichnet, dass** an einer Stirnseite (25) zumindest ein Fenster (15) vorgesehen ist, welches sich über einen Teil eines Umfangs des Koppelelementes erstreckt, wobei an einem umfangsseitigen Ende des Fensters (15) eine Vertiefung (16) angeordnet ist, in welche eine mit der Vertiefung (16) korrespondierende Klaue (14) eingreifen kann.

13. Verfahren zum Betreiben eines Antriebes (1) nach einem der Ansprüche 1 bis 10, welcher einen Elektromotor (2) und ein mit dem Elektromotor (2) verbundenes Getriebe (3) aufweist, wobei das Getriebe (3) zumindest zwei Gänge (6, 7) mit unterschiedlichen Übersetzungen aufweist, über welche eine Abtriebswelle (5) mit einer Antriebswelle (4) koppelbar ist, um unterschiedliche Übersetzungsverhältnisse von einer Drehzahl der Antriebswelle (4) auf eine Drehzahl der Abtriebswelle (5) zu erreichen, wobei ein Schaltvorgang erfolgt, indem zunächst eine rotatorische Koppelung der durch den mit einer ersten Drehzahl rotierenden Elektromotor (2) angetriebenen Antriebswelle (4) mit der Abtriebswelle (5) über einen ersten Gang (6) mit einem ersten Übersetzungsverhältnis gelöst wird, sodass die Antriebswelle (4) mit der Abtriebswelle (5) nicht mehr rotatorisch gekoppelt ist, wonach die Antriebswelle (4) mit der Abtriebswelle (5) über einen zweiten Gang (7) mit einem zweiten Übersetzungsverhältnis rotatorisch gekoppelt wird, **dadurch gekennzeichnet, dass** eine Drehzahl des Elektromotors (2) mittels einer elektrischen Synchronisiereinrichtung (8) während einer Dauer des Schaltvorganges etwa auf eine zweite Drehzahl geändert wird, indem der Elektromotor (2) beschleunigt oder gebremst wird, wobei die zweite Drehzahl der ersten Drehzahl multipliziert mit dem Quotienten aus zweitem Übersetzungsverhältnis und erstem Übersetzungsverhältnis entspricht, wonach die Antriebswelle (4) mit der Abtriebswelle (5) mittels eines Formschlusses rotatorisch gekoppelt wird.

14. Verfahren nach Anspruch 13, **dadurch gekennzeichnet, dass** eine Energie zum Beschleunigen des Elektromotors (2) aus einem Akkumulator (9) entnommen wird.

15. Verfahren nach Anspruch 13, **dadurch gekennzeichnet, dass** beim Abbremsen kinetische Energie in elektrische Energie gewandelt und zumindest teilweise in einem Akkumulator (9) gespeichert wird.

## Claims

1. A drive (1) having an electric motor (2) and a gearbox (3) to which the electric motor (2) is connected at an input shaft (4), in particular for an electric vehicle, the gearbox (3) having at least two gears (6, 7) with different transmission ratios, by means of which an output shaft (5) can be alternately coupled to the input shaft (4) in order to achieve different transmission ratios of a rotational speed of the input shaft (4) to a rotational speed of the output shaft (5), the gearbox (3) being designed to carry out a shifting process in which first a coupling of the input shaft (4), driven by the electric motor (2) rotating at a first rotational speed, to the output shaft (5) via a first gear (6) with a first transmission ratio is disconnected, so that the input shaft (4) is no longer rotationally coupled to the output shaft (5), after which the input shaft (4) is rotationally coupled to the output shaft (5) via a second gear (7) with a second transmission ratio, an electric synchronising device (8) being provided, with which a rotational speed of the electric motor (2) can be changed to a second rotational speed during a duration of the shifting process, the second rotational speed corresponding to the first rotational speed multiplied by a quotient of the second transmission ratio and the first transmission ratio, the drive (1) being designed to establish a disconnectable rotational coupling between the input shaft (4) and the output shaft (5) via the second gear (7) by means of a form fit, **characterised in that** the input shaft (4) can be disconnectably coupled via a gear to the output shaft (5) by means of at least one claw (14), which engages in a depression (16), wherein the depression (16) is arranged in a window (15) which extends in a direction along which an element which is coupled to the input shaft (4) can move relative to an element which is coupled to the output shaft (5) when the output shaft (5) is not coupled to the input shaft (4) during a shifting process, so that the claw (14) can move through the window (15) and into the depression (16) from an uncoupled state.

2. The drive (1) according to Claim 1, **characterised in that**, to establish a disconnectable rotational form-fitting connection between the input shaft (4) and the output shaft (5), the drive (1) has a rotatable first element with a window (15), in which a stop (17) is arranged, and a rotatable second element with a protrusion, in particular a claw (14), which can be introduced into the window (15), wherein a rotational movement can be transmitted form-fittingly from the second element to the first element by means of the protrusion.

3. The drive (1) according to Claim 1 or 2, **characterised in that** the drive (1) is designed to carry out a shifting process in which the duration of the shifting process is less than one second, in particular less than 150 ms.

4. The drive (1) according to any one of Claims 1 to 3, **characterised in that** at least one coupling element is provided, which is connected to the input shaft (4) or the output shaft (5) form-fittingly in a first direction, in particular in a circumferential direction (11), and movably in a second direction, in particular in an axial direction (12), in order to connect at least one gear disconnectably to the input shaft (4) or the output shaft (5).

5. The drive (1) according to any one of Claims 1 to 4, **characterised in that** the claw and the depression are designed such that the claw has a clearance of less than 20 mm, in particular less than 10 mm, preferably less than 5 mm, relative to the depression when the input shaft is coupled to the output shaft.

6. The drive (1) according to any one of Claims 1 to 5, **characterised in that** the depression (16) is arranged at the end of the window (15).

7. The drive (1) according to Claim 6, **characterised in that** the gearwheel pairings are connected for conjoint rotation to the input shaft (4) and can be connected to the output shaft (5) via at least one coupling element in the form of a claw wheel (13), wherein the claw wheel (13) is connected form-fittingly to the output shaft (5) in the circumferential direction (11) and is displaceable relative to the output shaft (5) in an axial direction (12).

8. The drive (1) according to Claim 7, **characterised in that** the output-side gearwheels of the gearwheel pairings each have at least one claw (14), preferably two to seven, in particular three to five, claws (14), which extend in the axial direction and correspond with depressions (16) in an end face (25) of the claw wheel (13).

9. The drive (1) according to Claim 7 or 8, **characterised in that** each of the depressions (16) in the claw wheel (13) which correspond to the claws (14) is arranged in a window (15) running in a circumferential direction (11), wherein the depression (16) is arranged in the window (15) at the end in the circumferential direction (11), wherein it is preferably provided for the window (15) to have a ramp (18) at the end opposite the depression (16).

10. The drive (1) according to Claim 9, **characterised in that** the ramp (18) has a face which is arranged at an angle relative to a bottom of the window (15) and connects the bottom of the window (15) to the end face (25).

11. An electric vehicle having a drive (1), **characterised in that** the drive (1) is designed according to any one of Claims 1 to 10.

12. A coupling element for a drive (1) according to any one of Claims 1 to 10, **characterised in that** at least one window (15) is provided on an end face (25), said window extending over a part of a circumference of the coupling element, wherein a depression (16) is arranged on a circumference-side end of the window (15), into which depression a claw (14) corresponding with the depression (16) can engage.

13. A method for operating a drive (1) according to any one of Claims 1 to 10, which has an electric motor (2) and a gearbox (3) connected to the electric motor (2), the gearbox (3) having at least two gears (6, 7) with different transmission ratios, via which an output shaft (5) can be coupled to an input shaft (4) in order to achieve different transmission ratios of a rotational speed of the input shaft (4) to a rotational speed of the output shaft (5), a shifting process taking place in that first a rotational coupling of the input shaft (4), driven by the electric motor (2) rotating at a first rotational speed, to the output shaft (5) via a first gear (6) with a first transmission ratio is disconnected, so that the input shaft (4) is no longer rotationally coupled to the output shaft (5), after which the input shaft (4) is rotationally coupled to the output shaft (5) via a second gear (7) with a second transmission ratio, **characterised in that** a rotational speed of the electric motor (2) is changed approximately to a second rotational speed by means of an electric synchronising device (8) during a duration of the shifting process by accelerating or braking the electric motor (2), the second rotational speed corresponding to the first rotational speed multiplied by the quotient of the second transmission ratio and the first transmission ratio, after which the input shaft (4) is rotationally coupled to the output shaft (5) by means of a form fit.

14. The method according to Claim 13, **characterised in that** energy for accelerating the electric motor (2) is drawn from a battery (9).

15. The method according to Claim 13, **characterised in that**, during braking, kinetic energy is converted into electrical energy and at least partially stored in a battery (9).

## Revendications

1. Entraînement (1) avec un moteur électrique (2) et une boîte de vitesses (3) à laquelle le moteur électrique (2) est lié au niveau d'un arbre d'entraînement (4), en particulier pour un véhicule électrique, la boîte de vitesses (3) présentant au moins deux rapports (6, 7) avec différentes démultiplications au moyen desquelles un arbre mené (5) peut être accouplé par alternance à l'arbre d'entraînement (4) afin d'atteindre différents rapports de démultiplication depuis une vitesse de rotation de l'arbre d'entraînement (4) vers une vitesse de rotation de l'arbre mené (5), la boîte de vitesses (3) étant formée pour exécuter un passage de vitesse lors duquel tout d'abord un accouplement de l'arbre d'entraînement (4) entraîné par le moteur électrique (2) tournant à une première vitesse avec l'arbre mené (5) est détaché par un premier rapport (6) avec un premier rapport de démultiplication, de sorte que l'arbre d'entraînement (4) ne soit plus en accouplement en rotation avec l'arbre mené (5), suite à quoi l'arbre d'entraînement (4) est accouplé en rotation à l'arbre mené (5) par un deuxième rapport (7) avec un deuxième rapport de démultiplication, un dispositif de synchronisation électrique (8) étant prévu avec lequel une vitesse de rotation du moteur électrique (2) peut être modifiée en une deuxième vitesse pendant une durée du passage de vitesse, la deuxième vitesse correspondant à la première vitesse multipliée par un quotient issu du deuxième rapport de démultiplication et du premier rapport de démultiplication, l'entraînement (1) étant formé pour réaliser un accouplement en rotation détachable entre l'arbre d'entraînement (1) et l'arbre mené (5) par le deuxième rapport (7) au moyen d'un crabotage, **caractérisé en ce que** l'arbre d'entraînement (4) peut être accouplé de manière détachable à l'arbre mené (5) par un rapport au moyen au moins d'un crabot (14) s'engrenant dans une cavité (16), la cavité (16) étant agencée dans une fenêtre (15) qui s'étend le long d'une direction le long de laquelle un élément accouplé à l'arbre d'entraînement (4) est mobile par rapport à un élément accouplé à l'arbre mené (5) lorsque l'arbre mené (5) n'est pas accouplé à l'arbre d'entraînement (4) lors d'un passage de vitesse, de sorte que le crabot (14) peut être mobile à travers la fenêtre (15) dans la cavité (16) à partir un état désaccouplé.

2. Entraînement (1) selon la revendication 1, **caractérisé en ce que** pour réaliser une liaison crabotée rotative détachable entre l'arbre d'entraînement (4) et l'arbre mené (5), l'entraînement (1) présente un premier élément rotatif avec une fenêtre (15) dans laquelle est disposée une butée (17), et un deuxième élément rotatif avec une saillie, en particulier un crabot (14), pouvant être insérée dans la fenêtre (15), la saillie permettant de transférer par crabotage un mouvement de rotation du deuxième élément vers le premier élément.

3. Entraînement (1) selon la revendication 1 ou 2, **caractérisé en ce que** l'entraînement (1) est formé pour réaliser un passage de vitesse lors duquel la durée du passage de vitesse est inférieure à une seconde, en particulier inférieure à 150 ms.

4. Entraînement (1) selon l'une quelconque des revendications 1 à 3, **caractérisé en ce qu'**au moins un élément d'accouplement est prévu qui est relié à l'arbre d'entraînement (4) ou à l'arbre mené (5) par crabotage dans une première direction, en particulier dans une direction circonférentielle (11), et de manière mobile dans une deuxième direction, en particulier dans une direction axiale (12) afin de lier de manière détachable au moins un rapport avec l'arbre d'entraînement (4) ou l'arbre mené (5).

5. Entraînement (1) selon l'une quelconque des revendications 1 à 4, **caractérisé en ce que** le crabot et la cavité sont formés de telle sorte que le crabot présente alors, lorsque l'arbre d'entraînement est accouplé à l'arbre mené, un jeu inférieur à 20 mm par rapport à la cavité, en particulier inférieur à 10 mm, de préférence inférieur à 5 mm.

6. Entraînement (1) selon l'une quelconque des revendications 1 à 5, **caractérisé en ce que** la cavité (16) est disposée à l'extrémité au niveau de la fenêtre (15).

7. Entraînement (1) selon la revendication 6, **caractérisé en ce que** les paires de roues dentées sont reliées de manière solidaire en rotation à l'arbre d'entraînement (4) et peuvent être reliées par au moins un élément d'accouplement en forme de disque à crabots (13) à l'arbre mené (5), le disque à crabots (13) étant relié à l'arbre mené (5) par crabotage dans la direction circonférentielle (11) et de manière coulissante dans une direction axiale (12) par rapport à l'arbre mené (5).

8. Entraînement (1) selon la revendication 7, **caractérisé en ce que** les roues dentées côté mené des paires de roues dentées présentent chacune au moins un crabot (14), de préférence deux à sept, en particulier trois à cinq crabots (14), qui s'étendent en direction axiale et correspondent à des cavités (16) sur une face frontale (25) du disque à crabots (13).

9. Entraînement (1) selon la revendication 7 ou 8, **caractérisé en ce que** dans le disque à crabots (13), chacune des cavités (16) correspondant aux crabots (14) est disposée dans une fenêtre (15) s'étendant le long d'une direction circonférentielle (11), la cavité (16) étant disposée à l'extrémité de la fenêtre (15) dans la direction circonférentielle (11), moyennant quoi il est de préférence prévu que la fenêtre (15) présente une rampe (18) au niveau de l'extrémité opposée à la cavité (16).

10. Entraînement (1) selon la revendication 9, **caractérisé en ce que** la rampe (18) présente une surface qui est disposée en dessous d'un angle par rapport à un fond de la fenêtre (15) et qui relie le fond de la fenêtre (15) à la face frontale (15).

11. Véhicule électrique avec un entraînement (1), **caractérisé en ce que** l'entraînement (1) est formé selon l'une quelconque des revendications 1 à 10.

12. Élément d'accouplement pour un entraînement (1) selon l'une quelconque des revendications 1 à 10, **caractérisé en ce que** sur une face frontale (15), au moins une fenêtre (15) est prévue qui s'étire sur une partie d'une circonférence de l'élément d'accouplement, une cavité (15) dans laquelle un crabot (14) correspondant à la cavité (16) peut s'engrener étant disposée au niveau d'une extrémité circonférentielle de la fenêtre (15).

13. Procédé pour l'opération d'un entraînement (1) selon l'une quelconque des revendications 1 à 10 présentant un moteur électrique (2) et une boîte de vitesses (3) liée au moteur électrique (2), la boîte de vitesses (3) présentant au moins deux rapports (6, 7) avec différentes démultiplications par lesquels un arbre mené (5) peut être accouplé à un arbre d'entraînement (4) pour atteindre différents rapports de démultiplication depuis une vitesse de rotation de l'arbre d'entraînement (4) vers une vitesse de rotation de l'arbre mené (5), un passage de vitesse ayant lieu par le fait que d'abord, un accouplement rotatif de l'arbre d'entraînement (4) entraîné par le moteur électrique (2) tournant à une première vitesse avec l'arbre mené (5) est détaché par un première rapport (6) avec un premier rapport de démultiplication de sorte que l'arbre d'entraînement (4) n'est plus accouplé en rotation à l'arbre mené (5), puis l'arbre d'entraînement (5) étant accouplé en rotation à l'arbre mené (5) par un deuxième rapport (7) avec un deuxième rapport de vitesse, **caractérisé en ce qu'**une vitesse de rotation du moteur électrique (2) est modifiée par exemple vers une deuxième vitesse au moyen d'un dispositif de synchronisation (8) pendant une durée du passage de vitesse lors duquel le moteur électrique est accéléré ou freiné, la deuxième vitesse correspondant à la première vitesse multipliée par le quotient issu du deuxième rapport de démultiplication et du premier rapport de démultiplication, suite à quoi l'arbre d'entraînement (4) est accouplé en rotation à l'arbre mené (5) au moyen d'un crabotage.

14. Procédé selon la revendication 13, **caractérisé en ce qu'**une énergie est prélevée d'un accumulateur (9) pour accélérer le moteur électrique (2).

15. Procédé selon la revendication 13, **caractérisé en ce que** lors du freinage, de l'énergie cinétique est transformée en énergie électrique et est au moins en partie stockée dans un accumulateur (9).
